# EUROPEAN PATENT APPLICATION

(11) **EP 3 133 547 A1**
(43) Date of publication of application: **22.02.2017**
(21) Application number: 16159256.3
(22) Date of filing: 08.03.2016
(51) Int. Cl.: G06Q 30/02, G06Q 30/06

(54) **SYSTEM FOR PROVIDING SHOPPING INFORMATION BASED ON AUGMENTED REALITY AND CONTROL METHOD THEREOF**

(30) Priority: 18.08.2015 KR 20150116134
(71) Applicant: Kim, Young Duck, Seoul 04726 (KR)
(72) Inventor: Kim, Young Duck, Seoul 04726 (KR)
(74) Representative: Beetz & Partner mbB

(57) **Abstract**

Disclosed are a system for providing shopping information based on augmented reality and a control method thereof. That is, according to the present invention, when an object to be found is searched in image information on a road view of a street on which a shopping mall including stores at which products are displayed or stores are positioned, the corresponding image information where a product or a service corresponding to the searched object exists is displayed to thereby provide views actually encountered in department stores, shopping malls, streets, and the like as they are, and easily and conveniently search additional information associated with products or stores provided offline and verify a search result thereof.

## Description

### CROSS-REFERENCE TO RELATED APPLICATION

This application claims the benefit of Korean Application No. 10-2015-0116134, filed on August 18, 2015 with the Korean Intellectual Property Office, the disclosure of which is incorporated herein by reference.

### BACKGROUND OF THE INVENTION

### 1. Field of the Invention

The present invention relates to a system for providing shopping information based on augmented reality and a control method thereof, and particularly, to a system for providing shopping information based on augmented reality and a control method thereof which display, when searching an object to be found in image information on a road view of a street on which a shopping mall including stores at which products are displayed or stores are positioned, the corresponding image information where a product or a service corresponding to the searched object exists.

### 2. Description of the Related Art

A panoramic image means an image achieved by synthesizing multiple images of a subject.

When the panoramic image is applied to an Internet shopping mall, an offline situation is implemented as an online virtual reality and schematic information regarding products or stores included in the panoramic image is just provided, and as a result, information provided offline implemented as a virtual reality cannot be normally provided.

### [Prior Art Document]

[Patent Document] Korean Patent Publication No. 10-2013-0084274, titled 3D Virtual Reality Internet Shopping mall"

### SUMMARY OF THE INVENTION

An object of the present invention is to provide a system for providing shopping information based on augmented reality and a control method thereof which display, when searching an object to be found in image information on a road view of a street on which a shopping mall including stores at which products are displayed or stores are positioned, the corresponding image information where a product or a service corresponding to the searched object exists.

Another object of the present invention is to provide a system for providing shopping information based on augmented reality and a control method thereof which display, in image information on a road view of a street on which a shopping mall including stores at which products are displayed or stores are positioned, a coupon or gift card usable in a store included in the corresponding information, when the coupon or gift card is selected, display one or more stores at which the coupon or gift card can be used, and issue the corresponding coupon to a terminal or perform a payment function for the corresponding gift card, and thereafter, issue the corresponding gift card of which payment is completed to the terminal.

According to an aspect of the present invention, a system for providing shopping information based on augmented reality, may include: a server verifying 3D panoramic image information corresponding to positional information of a purchase terminal among a plurality of 3D panoramic image information and transmitting the verified 3D panoramic image information corresponding to the positional information of the purchase terminal; and the purchase terminal displaying the 3D panoramic image information corresponding to the positional information of the purchase terminal, which is transmitted from the server on a pre-executed application execution result screen, displaying, when a predetermined search item included in the application execution result screen is selected, a search word input screen for receiving a search word corresponding to the selected search item, and transmitting, to the server, a search word depending on a user input, pre-stored member information, the positional information of the purchase terminal, and the identification information of the purchase terminal.

Preferably, the 3D panoramic image information may be generated based on any one recorded image information or real-time image information among fixed real-time image information photographed through a camera pre-installed at a specific location, mobile recorded image information photographed through a camera installed in a moving device, and real-time image information photographed through the camera installed in the moving device.

Preferably, the server may verify another 3D panoramic image information including another object corresponding to the search word and the positional information of the purchase terminal among the plurality of 3D panoramic image information and transmit the verified another 3D panoramic image information to the purchase terminal.

Preferably, the purchase terminal may display, when the 3D panoramic image information transmitted from the server to correspond to the search word and the positional information of the purchase terminal is plural, the plurality of 3D panoramic image information based on the positional information of the purchase terminal, through a PIP function or screen division function.

According to another aspect of the present invention, a system for providing shopping information based on augmented reality, may include: a server verifying 3D panoramic image information including an object corresponding to positional information of a purchase terminal among a plurality of 3D panoramic image information, verifying information on at least one coupon and gift card associated with at least one object included in the 3D panoramic image information stored by interlocking with the verified 3D panoramic image information corresponding to the positional information of the purchase terminal, verifying priority information for the at least one coupon and gift card, and transmitting the verified 3D panoramic image information corresponding to the positional information of the purchase terminal, the information on at least one coupon and gift card which interlock with the verified 3D panoramic image information, and the verified priority information for at least one coupon and gift card; and the purchase terminal receiving 3D panoramic image information corresponding to the positional information of the purchase terminal, which is transmitted from the server, the information on at least one coupon and gift card which interlock with the 3D panoramic image information, and the priority information for the at least one coupon and gift card, displaying the received 3D panoramic image information corresponding to the positional information of the purchase terminal and information on at least one coupon and gift card which interlock with the received 3D panoramic image information, and displaying, when a specific coupon or specific gift card is selected in the information on at least one coupon and gift card, which is displayed, store information for at least one store where the selected specific coupon or specific gift card is usable by using an augmented reality function.

Preferably, the purchase terminal may display a part of the information on at least one coupon and gift card, which interlocks with the received 3D panoramic image information based on the priority information for the at least one received coupon and gift card.

Preferably, the purchase terminal may store the specific coupon issued from the server when the specific coupon is selected, perform a payment function for the specific gift card by interlocking among the server, a payment server, and a selling terminal when the specific gift card is selected, and store the specific gift card issued from the server when the payment function is normally completed.

According to yet another aspect of the present invention, a control method of a system for providing shopping information based on augmented reality, may include: generating, by a server, panoramic image information including one or more stores and products in the store offline; transmitting, by a purchase terminal, positional information of the purchase terminal and identification information of the purchase terminal to the server when an application pre-installed in the purchase terminal is executed; verifying, by the server, 3D panoramic image information corresponding to positional information of a purchase terminal among a plurality of pre-stored 3D panoramic image information and transmitting verified 3D panoramic image information corresponding to the positional information of the purchase terminal to the purchase terminal; displaying, by the purchase terminal, the 3D panoramic image information corresponding to the positional information of the purchase terminal, which is transmitted from the server on a pre-executed application execution result screen; displaying, by the purchase terminal, when a predetermined search item included in the application execution result screen is selected, a search word input screen for receiving a search word corresponding to the selected search item; transmitting, by the purchase terminal, a search word depending on a user input, pre-stored member information, the positional information of the purchase terminal, identification information of the purchase terminal to the server; transmitting, by the server, another 3D panoramic image information corresponding to the search word and the positional information of the purchase terminal among the plurality of pre-stored 3D panoramic image information to the purchase terminal; and displaying, by the purchase terminal, another 3D panoramic image information transmitted from the server to correspond to the search word and the positional information of the purchase terminal.

Preferably, the generating of the panoramic image information may include a process of photographing each of a first image and a second image including one or more stores and products in the stores offline through a plurality of cameras, through the server; a process of acquiring an overlapping area where the first image and the second image overlap with each other based on the orientation of pixels with respect to the photographed first image and second image, through the server; a process of generating a panoramic image by synthesizing the first image and the second image based on the acquired overlapping area, through the server; a process of recognizing each of one or more objects included in the panoramic image, through the server; a process of verifying one or more coupons and gift cards usable in stores corresponding to the one or more recognized objects, through the server; and a process of interlocking and storing the panoramic image and one or more coupons and gift cards usable in the verified object, through the server.

Preferably, in the displaying of the another 3D panoramic image information, when the 3D panoramic image information transmitted from the server to correspond to the search word and the positional information of the purchase terminal is plural, the plurality of 3D panoramic image information may be displayed based on the positional information of the purchase terminal, through a PIP function or a screen division function.

Still yet another aspect of the present invention, a control method of a system for providing shopping information based on augmented reality, may include: generating, by a server, panoramic image information including one or more stores and products in the store offline; transmitting, by a purchase terminal, positional information of the purchase terminal and identification information of the purchase terminal to the server when an application pre-installed in the purchase terminal is executed; verifying, by the server, 3D panoramic image information corresponding to positional information of a purchase terminal among a plurality of pre-stored 3D panoramic image information, verifying information on at least one coupon and gift card associated with at least one object included in the 3D panoramic image information stored by interlocking with the verified 3D panoramic image information corresponding to the positional information of the purchase terminal, and verifying priority information for the at least one coupon and gift card; receiving, by the purchase terminal, 3D panoramic image information corresponding to the positional information of the purchase terminal, which is transmitted from the server, the information on at least one coupon and gift card which interlock with the 3D panoramic image information, and the priority information for the at least one coupon and gift card; displaying, by the purchase terminal, the received 3D panoramic image information corresponding to the positional information of the purchase terminal and information on at least one coupon and gift card which interlock with the received 3D panoramic image information; displaying, by the purchase terminal, when a specific coupon or specific gift card is selected in the information on at least one coupon and gift card, which is displayed, store information for at least one store where the selected specific coupon or specific gift card is usable by using an augmented reality function; and storing, by the purchase terminal, when specific store information is selected in the store information for at least one store, which is displayed, the selected specific coupon or specific gift card issued from the server.

Preferably, in the displaying of the information on at least one coupon and gift card which interlock with the received 3D panoramic image information, a part of the information on at least one coupon and gift card which interlock with the received 3D panoramic image information may be displayed based on the priority information for the at least one received coupon and gift card.

Preferably, the storing of the selected specific coupon or specific gift card issued from the server may include a process of storing the specific coupon issued from the server when the specific coupon is selected by the purchase terminal; and a process of performing a payment function for the specific gift card by interlocking among the server, a payment server, and a selling terminal when the specific gift card is selected and storing the specific gift card issued from the server when the payment function is normally completed, through the purchase terminal.

According to the present invention, when an object to be found is searched in image information on a road view of a street on which a shopping mall including stores at which products are displayed or stores are positioned, the corresponding image information where a product or a service corresponding to the searched object exists is displayed to thereby provide views actually encountered in department stores, shopping malls, streets, and the like as they are, and easily and conveniently search additional information associated with products or stores provided offline and verify a search result thereof.

Further, according to the present invention, in image information on a road view of a street on which a shopping mall including stores at which products are displayed or stores are positioned, a coupon or gift card usable in a store included in the corresponding image information is displayed, when the coupon or gift card is selected, one or more stores at which the coupon or gift card can be used are displayed, and the corresponding coupon is issued to a terminal or a payment function for the corresponding gift card is performed, and thereafter, the corresponding gift card of which payment is completed is issued to the terminal to thereby improve user convenience and satisfaction and increase sales of business owners.

### BRIEF DESCRIPTION OF THE DRAWINGS

FIG. 1 is a block diagram illustrating a configuration of a system for providing shopping information based on augmented reality according to an embodiment of the present invention.
FIG. 2 is a flowchart illustrating a control method of a system for providing shopping information based on augmented reality according to a first embodiment of the present invention.
FIGS. 3 to 8 are diagrams illustrating a screen of a purchase terminal according to an embodiment of the present invention.
FIG. 9 is a flowchart illustrating a control method of a system for providing shopping information based on augmented reality according to a second embodiment of the present invention.
FIGS. 10 and 11 are diagrams illustrating a screen of a purchase terminal according to an embodiment of the present invention.
FIGS. 12 and 13 are diagrams illustrating a screen of a purchase terminal according to an embodiment of the present invention while store information is being displayed.

### DETAILED DESCRIPTION OF THE PREFERRED EMBODIMENTS

Technical terms used in the present invention are used only to describe specific embodiments, and are not intended to limit the present invention. Further, unless otherwise defined, the technical terms used in the present invention should be interpreted as meanings generally appreciated by those skilled in the art and should not be interpreted as excessively comprehensive meanings or excessively reduced meanings. Further, when the technical term used in the present invention is a wrong technical term that does not accurately express the spirit of the present invention, the technical term should be understood by being substituted by a technical term which can be correctly understood by those skilled in the art. In addition, a general term used in the present invention should be interpreted as defined in a dictionary or contextually, and should not be interpreted as an excessively reduced meaning.

Further, singular expressions used in the present invention include plural expressions unless they have definitely opposite meanings in the context. In the present invention, a term such as comprising_or including_should not be interpreted as necessarily including all various components or various steps disclosed in the invention, and it should be interpreted that some component or some steps among them may not be included or additional components or steps may be further included.

Further, terms including an ordinary number, such as first and second, and the like are used for describing various components, but the components are not limited by the terms. The terms are used only for distinguishing one component from another component. For example, a first component may be referred to as a second component, and similarly, the second component may be referred to as the first component without departing from the scope of the present invention.

Hereinafter, embodiments of the present invention will be described in detail with reference to the accompanying drawings, in which like reference numerals refer to like or similar elements regardless of reference numerals and a duplicated description thereof will be omitted.

Further, in the following description, a detailed explanation of known associated technologies may be omitted to avoid unnecessarily obscuring the subject matter of the present disclosure. Further, it is noted that the accompanying drawings are only for easily understanding the spirit of the present invention and it should not be interpreted that the spirit of the present invention is limited by the accompanying drawings.

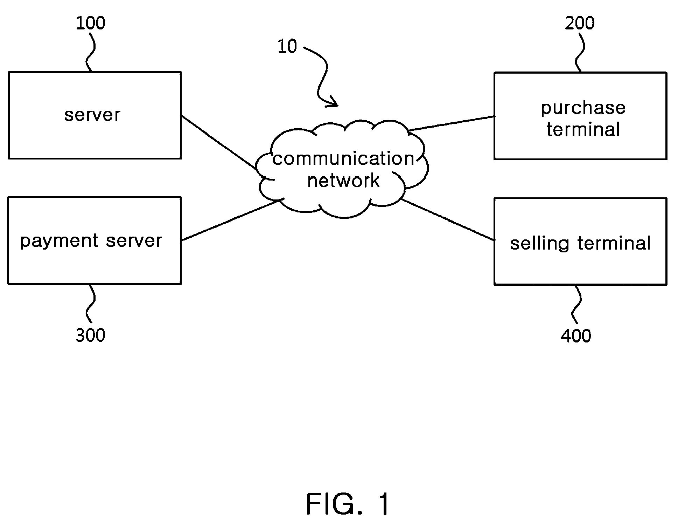

FIG. 1 is a block diagram illustrating a configuration of a system 10 for providing shopping information based on augmented reality according to an embodiment of the present invention.

As illustrated in FIG. 1, the system 10 for providing shopping information based on augmented reality is constituted by a server 100, a purchase terminal 200, a payment server 300, and a selling terminal 400. All constituent elements of the system 10 for providing shopping information based on augmented reality illustrated in FIG. 1 are not required, and the system 10 for providing shopping information based on augmented reality may be implemented by constituent elements which are more or fewer than the constituent elements illustrated in FIG. 1.

The purchase terminal 200 and/or the selling terminal 400 may be applied to various terminals such as a smart phone, a portable terminal, a mobile terminal, a personal digital assistant (PDA), a portable multimedia player (PMP), a telematics terminal, a navigation terminal, a personal computer, a notebook computer, a slate PC, a tablet PC, an ultrabook, a wearable device (for example, including a smartwatch, a smart glass, a head mounted display (HMD), and the like), a Wibro terminal, an Internet protocol television (IPTV) terminal, a smart TV, a digital broadcasting terminal, an audio video navigation (AVN) terminal, an audio/video (A/V) system, and a flexible terminal. Herein, the selling terminal 400 may be a point of sales (POS) terminal provided in a store, and the like.

Further, each of the server 100, the purchase terminal 200, the payment server 300, and the selling terminal 400 may include a communication unit for communication connection with a predetermined internal component or at least one predetermined external terminal through a wire/wireless communication network. Herein, a wireless Internet technology may include wireless LAN (WLAN), wireless broadband (Wibro), world interoperability for microwave access (Wimax), high speed downlink packet access (HSDPA), IEEE 802.16, long term evolution (LTE), a wireless mobile broadband service (WMBS), and the like. Further, a short range communication technology may include Bluetooth, Wi-Fi, radio frequency identification (RFID), infrared data association (IrDA), ultra wideband (UWB), ZigBee, near field communication (NFC), ultra sound communication (USC), visible light communication (VLC), Bluetooth low energy (BLE), and the like. In addition, a wire communication technology may include power line communication (PLC), USB communication, Ethernet, serial communication, optical/coaxial cable, and the like.

Further, the communication unit may transmit information with a predetermined terminal through a universal serial bus (USB).

Moreover, the communication unit transmits and receives a wireless signal to and from a base station, the purchase terminal 200, the server 100, the payment server 300, and the selling terminal 400 on a mobile communication network constructed according to technical standards for mobile communication or communication schemes (for example, global system for mobile communication (GSM), code division multi access (CDMA), code division multi access 2000 (CDMA2000), enhanced voice-data optimized or enhanced voice-data only (EV-DO), wideband CDMA (WCDMA), high speed downlink packet access (HSDPA), high speed uplink packet access (HSUPA), long term evolution (LTE), long term evolution-advanced (LTE-A), or the like).

Besides, each of the server 100, the purchase terminal 200, the payment server 300, and the selling terminal 400 may include a storage unit. Herein, the storage unit stores various user interfaces (UI), graphic user interfaces (GUI), and the like.

Further, the storage unit stores data and programs required for the server 100, the purchase terminal 200, the payment server 300, and the selling terminal 400 to operate, respectively.

That is, the storage unit may store multiple application programs or applications driven the server 100, the purchase terminal 200, the payment server 300, and the purchase terminal 400, and data and commands for operating the server 100, the purchase terminal 200, the payment server 300, and the purchase terminal 400. At least some of the application programs may be downloaded from an external server through wireless communication. Further, at least some of the application programs may exist on the server 100, the purchase terminal 200, the payment server 300, and the purchase terminal 400 from a release time for principal functions (for example, phone receipt, transmitting function, message receipt, and sending function)of the server 100, the purchase terminal 200, the payment server 300, and the purchase terminal 400. Meanwhile, the application programs may be stored in the storage unit and installed in the server 100, the purchase terminal 200, the payment server 300, and the purchase terminal 400, respectively to be driven for performing the respective operations (alternatively, functions) of the server 100, the purchase terminal 200, the payment server 300, and the purchase terminal 400.

Further, the storage unit may include at least one storage medium of a flash memory type, a hard disk type, a multimedia card micro type, a card type memory (for example, an SD or XD memory, or the like), a magnetic memory, a magnetic disk, an optical disk, a random access memory (RAM), a static random access memory (SRAM), a read-only memory (ROM), an electrically erasable programmable read-only memory (EEPROM), and a programmable read-only memory (PROM). Further, the server 100, the purchase terminal 200, the payment server 300, and the purchase terminal 400 may operate a web storage performing a storage function of the storage unit on the Internet or operate in association with the web storage.

Besides, each of the server 100, the purchase terminal 200, the payment server 300, and the selling terminal 400 may include a display unit. Herein, the display unit may include at least one of a liquid a liquid crystal display (LCD), a thin film transistor-liquid crystal display (TFT LCD), an organic light-emitting diode (OLED), a flexible display, a 3D display, an electronic ink (e-ink) display, and a light emitting diode (LED). Further, the display unit may be a touch screen.

Besides, each of the server 100, the purchase terminal 200, the payment server 300, and the selling terminal 400 may include a voice output unit. Herein, the voice output unit outputs voice information included in a signal subjected to predetermined signal processing by control by the control unit. Here, the voice output unit may include a receiver, a speaker, a buzzer, and the like.

Further, the voice output unit outputs a guide voice generated by the control unit.

Besides, each of the server 100, the purchase terminal 200, the payment server 300, and the selling terminal 400 may include the control unit. Herein, the control unit executes overall control functions of the server 100, the purchase terminal 200, the payment server 300, and the selling terminal 400, respectively.

Further, the control unit executes overall control functions of the server 100, the purchase terminal 200, the payment server 300, and the selling terminal 400 by using the programs and data stored in the storage unit. The control unit may include a RAM, a ROM, a CPU, a GPU, and a bus, and the RAM, the ROM, the CPU, the GPU, and the like may be connected to each other through the bus. The CPU accesses the storage unit to perform booting by using an O/S stored in the storage unit and perform various operations by using various programs, contents, data, and the like stored in the storage unit.

The server 100 communicates with the purchase terminal 200, the payment server 300, the selling terminal 400, and the like.

Further, the server 100 performs a member joining procedure for a user of the purchase terminal 200 by interlocking with the purchase terminal 200.

Further, the server 100 performs the member joining procedure for a user of the selling terminal 400 by interlocking with the selling terminal 400.

Further, the server 100 photographs a first image and a second image including one or more stores, products in the corresponding stores, and the like offline through a plurality of cameras (not illustrated) included in the corresponding server 100. Herein, the stores include department stores, shopping malls, outlets, restaurants, hospitals, buildings (alternatively, constructions), and the like. In this case, the image information photographed through the plurality of cameras includes fixed real-time image information photographed through a camera (for example, CCTVs provided in the shopping mall, the store, and the like) pre-installed at a specific location, a movable recorded image information photographed through a camera installed in a moving device (alternatively, a road view device (not illustrated)), real-time image information photographed through the camera installed in the moving device, and the like.

Further, when the store is the shopping mall, the department store, the outlet, or the like, product display locations displayed in the corresponding store may be set based on plan-O-gram (POG), that is, a predetermined standard product layout database.

In addition, the server 100 acquires an overlapping area where the first image and the second image overlap with each other based on the orientation of pixels with respect to the photographed first image and second image.

In the embodiment of the present invention, it is described that the first image and the second image are synchronized with each other based on the acquired overlapping area to generate the panoramic image, but the present invention is not limited thereto and the server 100 may synthesize the photographed first and second images by previously known various synthesis methods to generate the panoramic image. Moreover, the server 100 may generate respective panorama images for respective used languages.

Besides, the server 100 may generate the panoramic image for each language by considering a language-specific characteristic.

In this case, the server 100 may generate the panoramic image based on the first and second images photographed through a plurality of cameras (for example, a special device for photographing the 3D panoramic image and a plurality of cameras configured in the special vehicle, and the like) which are separately configured.

Further, the server 100 recognizes each of one or more objects included in the panoramic image. Herein, the objects may be respective stores positioned offline.

That is, the server 100 recognizes each of one or more stores included in the panoramic image.

Further, the server 100 verifies one or more coupons and/or gift cards (alternatively, a coupon/gift card usable for each object) usable in the store corresponding to each of one or more recognized objects.

In addition, the server 100 interlocks the panoramic image and information (alternatively, information on the coupon/gift card usable for each object) on one or more verified coupons and/or gift cards usable in the object, and then, stores the panoramic image and the information.

Further, the server 100 receives positional information of the purchase terminal 200, identification information of the purchase terminal 200, and the like transmitted from the purchase terminal 200. Herein, the identification information of the purchase terminal 200 includes a mobile directory number (MDN), a mobile IP, a mobile MAC, subscriber identity module (Sim) card unique information, a serial number, and the like.

Moreover, the server 100 verifies 3D panoramic image information corresponding to the positional information of the purchase terminal 200 among a plurality of 3D panoramic image information which is pre-stored.

Further, the server 100 transmits, to the purchase terminal 200, the verified 3D panoramic image information corresponding to the positional information of the purchase terminal 200.

In addition, the server 100 verifies information on at least one coupon and/or gift card associated with at least one object included in the corresponding 3D panoramic image information stored by interlocking with the verified 3D panoramic image information corresponding to the positional information of the purchase terminal 200. In this case, the server 100 may verify priority information for the corresponding coupon and/or gift card.

In addition, the server 100 transmits, to the purchase terminal 200, the verified 3D panoramic image information corresponding to the positional information of the purchase terminal 200, the information (alternatively the information on at least one coupon and/or gift card associated with at least one object included in the corresponding 3D panoramic image information) on at least one coupon and/or gift card which interlocks with the corresponding 3D panoramic image information, the priority information for the corresponding coupon and/or gift card, and the like.

Further, the server 100 receives the search word, the member information pre-stored in the purchase terminal 200, the positional information of the purchase terminal 200, the identification information of the purchase terminal 200, and the like transmitted from the purchase terminal 200.

In addition, the server 100 verifies the search word and the 3D panoramic image information corresponding to the positional information of the purchase terminal 200 among the plurality of pre-stored 3D panoramic image information, and transmits, to the purchase terminal 200, the search word and the 3D panoramic image information corresponding to the positional information of the purchase terminal 200 which are verified. In this case, the server 100 may additionally reflect the received member information, in addition to the search word and the positional information of the purchase terminal 200, to verify the 3D panoramic image information. In addition, when the verified 3D panoramic image information is plural, the server 100 may also transmit, to the purchase terminal 200, the plurality of verified 3D panoramic image information, distance information between the store and the purchase terminal 200 included in each 3D panoramic image information, and the like.

When specific store information is selected among store information for at least one store displayed in the purchase terminal 200 (alternatively, when the specific store information is selected and thereafter, a predetermined download button displayed to be adjacent to the corresponding specific store information is selected), the server 100 receives the specific store information (alternatively, the selected button information) transmitted from the purchase terminal 200.

Further, the server 100 verifies a specific coupon (alternatively, the selected specific coupon (including, for example, a discount coupon, a free coupon, and the like)) usable in the corresponding specific store corresponding to the specific store information (alternatively, the selected button information) based on the received specific store information (alternatively, the selected button information) among coupons/gift cards usable for each of the plurality of store information which is pre-stored.

In addition, the server 100 issues, to the purchase terminal 200, a specific coupon (alternatively, the selected specific coupon (including, for example, the discount coupon, the free coupon, and the like)) usable in the corresponding specific store corresponding to the verified specific store information (alternatively, the selected button information).

Further, when the specific store information is selected among store information for at least one store displayed in the purchase terminal 200 (alternatively, when the specific store information is selected and thereafter, a predetermined purchase button/payment button displayed to be adjacent to the corresponding specific store information is selected), the server 100 performs a payment function for a specific gift card usable in a specific store corresponding to the selected specific store information by interlocking with the purchase terminal 200, the payment server 300, and the selling terminal 400.

In addition, after performing the payment function is normally completed, the server 100 provides a payment function performance result (alternatively, payment information) to the purchase terminal 200. Herein, the payment function performance result (alternatively, payment information) includes specific gift card information, payment date and time information, and the like which are usable in the specific store.

Further, after performing the payment function is normally completed, the server 100 issues, to the purchase terminal 200, a specific gift card usable in the corresponding specific store corresponding to the specific store information (alternatively, the selected button information) based on the specific store information (alternatively, the selected button information).

Herein, the specific gift card may be a multi-product discount coupon that is generated by the server 100.

That is, after performing the payment function is normally completed, the server 100 generates the multi-product discount coupon (alternatively, a multi-service discount coupon/multi-product and service discount coupon) including the cover price, the discount price, and an expiration date corresponding to the specific product and service information, which are provided in the corresponding specific store and usable in the specific store, a plurality of product and service item codes (alternatively, a plurality of product and service information associated with the specific product and service information/a plurality of product and service information in the same category as the specific product and service information) associated with the specific product and service information, a unique number (alternatively, a unique number of the multi-product discount coupon), and the like. Herein, the multi-product discount coupon is a state in which a plurality of product and service item codes associated with the specific product and service information is grouped into one code and is generated as the bar code type, the QR code type, a letter string type, or the like. Further, each of the plurality of products and service information includes a product name (alternatively, service name), a product unique code (alternatively, service unique code), a product image (alternatively, service base image), product description information (alternatively, service description information), experience information of the product/service, evaluation information for the product/service, positional information of a store selling the corresponding product (alternatively, providing the corresponding service), a telephone number of the store, and the like. In this case, the letter string type multi-product discount coupon may be generated by at least one combination of numbers, letters, special letters, and symbols. Herein, the product item code corresponds to a product unique code (alternatively, service unique code) in the product information. Further, the experience information for the product/service may be experience information prepared by a terminal of a member pre-registered in the server 100, experience information prepared by a terminal purchasing the multi-product discount coupon associated with the corresponding product/service provided by the server 100, and the like.

Further, the server 100 issues the generated multi-product discount coupon to the purchase terminal 200.

In addition, the server 100 may previously set the quantity (alternatively, selling/payment price) of the multi-product discount coupon which may be purchased by one purchase terminal 200.

That is, the server 100 may be configured to purchase a multi-product discount coupon corresponding to a specific product and a specific service in one purchase terminal 200 within a predetermined selling quantity range (alternatively, selling/payment price range) (for example, within 100 coupons or within 20 million won).

As described above, the server 100 limits a large purchase for the specific product and service to prevent an illegal transaction.

Further, after performing the payment function is normally completed, the server 100 issues (alternatively, transmits), to the purchase terminal 200, a free discount coupon, a discount coupon, a gift card of a specific shopping mall, a gift card of a traditional market, and the like additionally provided with purchasing the multi-product discount coupon.

In addition, when the user receives a specific product and/or service in the store having the selling terminal 400 and thereafter, intends to use the multi-product discount coupon stored in the purchase terminal 200, the server 100 performs a use processing (alternatively, payment processing) function for the multi-product discount coupon stored in the purchase terminal 200 by interlocking among the purchase terminal 200, the payment server 300, and the purchase terminal 400.

Moreover, the server 100 processes (alternatively, switches/changes), into use completion state, the corresponding multi-product discount coupon transmitted (alternatively, issued) to the purchase terminal 200.

Further, after performing the payment function is normally completed, when there is a balance of the corresponding multi-product discount coupon), the server 100 transmits, to the purchase terminal 200, a multi-product discount coupon including a usable price (alternatively, balance information), and the like. In this case, the usable price may be a price acquired by subtracting a payment price depending on the performing of the payment function from a just previously (alternatively, previous) usable price.

Further, after performing the payment function is normally completed, when there is the balance of the corresponding multi-product discount coupon), the server 100 may also transmit information including the usable price (alternatively, balance information), and the like to the purchase terminal 200 through the selling terminal 400.

In addition, after performing the payment function is normally completed, the server 100 transmits a predetermined point and/or discount coupon to the purchase terminal 200.

Moreover, after performing the payment function is normally completed, the server 100 may also transmit the predetermined point and/or discount coupon to the purchase terminal 200 through the selling terminal 400.

Besides, with the use of the multi-product discount coupon, charges may be distributed among the server 100, the payment server 300, and the selling terminal 400.

Further, when the expiration date included in the multi-product discount coupon issued by the purchase terminal 200 reaches a predetermined date (including for example, one month from the expiration date, 15 days from the expiration date, 7 days from the expiration date, 3 days from the expiration date, 1 day from the expiration date, and the like) and a usable price (alternatively, balance) remains in the corresponding multi-product discount coupon information, the server 100 transmits information including information indicating that the balance remains in the multi-product discount coupon, the expiration date, and the like to the purchase terminal 200.

In addition, the server 100 receives the experience information for the specific product/service, the evaluation information for the specific product/service, and the like transmitted from the purchase terminal 200.

Moreover, the server 100 stores the experience information for the received specific product/service, the evaluation information for the specific product/service, and the like, by interlocking (matching) with the corresponding product/service.

The purchase terminal 200 communicates with the server 100, the payment server 300, the selling terminal 400, and the like.

Further, the purchase terminal 200 performs a member joining procedure for the user of the purchase terminal 200 by interlocking with the server 100.

In addition, when the purchase terminal 200 performs the member joining procedure, the purchase terminal 200 may normally complete the member joining procedure for the server 100 only by completing an authentication function through an own authentication means (including, for example, a mobile phone, a credit card, an ipin, and the like).

Further, when an application pre-installed in the purchase terminal 200 is executed, the purchase terminal 200 displays an application execution result screen. Herein, the application execution result screen includes a panoramic image information item for displaying the 3D panoramic image, a search item for searching the 3D panoramic image, a setting item for setting a function of the application, a my-page item for verifying coupon and product information which is issued or purchased, and the like. In this case, the purchase terminal 200 communicates with the server 100 associated with the corresponding application in a background state.

Further, when the application pre-installed in the purchase terminal 200 is executed or when a predetermined panoramic image information item is selected on the application execution result screen, the purchase terminal 200 transmits the positional information of the purchase terminal 200, the identification information of the purchase terminal 200, and the like to the server 100. Herein, the identification information of the purchase terminal 200 includes an MDN, a mobile IP, a mobile MAC, subscriber identity module (Sim) card unique information, a serial number, and the like.

In this case, the purchase terminal 200 may include a GPS receiver (not illustrated). Herein, the GPS receiver receives a GPS signal transmitted from a satellite and generates position data of the purchase terminal 200 based on a longitude coordinate and a latitude coordinate included in the received GPS signal in real time. Herein, the generated position data is defined as a current position (alternatively, current position data) of the purchase terminal 200. Herein, the positional information may be also received through the Wi-Fi or Wibro communication as well as the GPS receiver.

Further, the signal received through the GPS receiver may be configured to provide the positional information of the terminal to the purchase terminal 200 by using wireless communication schemes including 802.11 which is a standard of wireless networks for a wireless LAN proposed in Institute of Electrical and Electronics Engineers (IEEE) and a wireless LAN including some infrared communications, and the like, 802.15 which is a standard for a wireless personal area network (PAN) including Bluetooth, UWB, ZigBee, and the like, 802.16 which is a standard for a wireless metropolitan area network (MAN) including fixed wireless access (FWA), and the like and broadband wireless access (BWA), 802.20 which is a standard for mobile internet for mobile broadband wireless access (MBWA) including Wibro, WiMAX, and the like, and the like.

Further, the purchase terminal 200 receives the 3D panoramic image information corresponding to the positional information of the purchase terminal 200 transmitted from the server 100 in response to the positional information of the purchase terminal 200 which is transmitted as above.

In addition, the purchase terminal 200 displays the received 3D panoramic image information corresponding to the positional information of the purchase terminal 200.

Thereafter, the purchase terminal 200 receives the 3D panoramic image information corresponding to the positional information of the purchase terminal 200, the information (alternatively the information on at least one coupon and/or gift card associated with at least one object included in the corresponding 3D panoramic image information) on at least one coupon and/gift card which interlocks with the corresponding 3D panoramic image information, the priority information for the corresponding coupon and/or gift card, and the like which are transmitted from the server 100 in response to the positional information of the purchase terminal 200 which is transmitted as above.

Further, the purchase terminal 200 displays the received 3D panoramic image information corresponding to the positional information of the purchase terminal 200, the information on the at least one coupon and/or gift card which interlocks with the corresponding received 3D panoramic image information, and the like. In this case, the purchase terminal 200 may display only a part among the information on at least one coupon and/or gift card which interlocks with the corresponding received 3D panoramic image information based on the received priority information for the corresponding coupon and/or gift card.

In addition, when the search item is selected on the application execution result screen displayed in the purchase terminal 200 (alternatively, when the search item is selected on the application execution result screen while the received 3D panoramic image information corresponding to the positional information of the purchase terminal 200 is displayed), the purchase terminal 200 displays a search word input screen for inputting (alternatively, receiving) a search word corresponding to the selected search item.

Further, the purchase terminal 200 receives a search word according to a user input (alternatively, a user touch).

Herein, when the 3D panoramic image information to be searched is the shopping mall, the search word may be men's wear, women's wear, sports goods, beef, fruit, a fish, ramen, cosmetics, a rest room, an elevator, and the like.

In addition, when the 3D panoramic image information to be searched is the road view, the search word may be a restaurant, plastic surgery, a pharmacy, a cosmetics shop, an accessory shop, the rest room, and the like.

Further, the purchase terminal 200 transmits the received search word, the member information pre-stored in the purchase terminal 200, the positional information of the purchase terminal 200, the identification information of the purchase terminal 200, and the like to the server 100. Herein, the member information includes a name, an address, a used language, and the like associated with a user of the corresponding purchase terminal 200.

Further, the purchase terminal 200 receives the search word transmitted from the server 100 in response to the transmitted search word as above and the 3D panoramic image information corresponding to the positional information of the purchase terminal 200.

Further, the purchase terminal 200 displays the received search word and the 3D panoramic image information corresponding to the positional information of the purchase terminal 200. In this case, the purchase terminal 200 may display a predetermined emoticon or icon in an area adjacent to a store corresponding to the search word, provide a highlight effect to the corresponding store, provide an effect to display an outer contour of the corresponding store with a predetermined color, or provide an effect to provide an augmented reality function to easily verify the store corresponding to the search word.

In addition, when the purchase terminal 200 receives a plurality of 3D panoramic image information transmitted from the server 100 in response to the transmitted search word, the purchase terminal 200 may display 3D panoramic image information including a store closest to a current position of the purchase terminal 200 among the plurality of 3D panoramic image information as a main image and display residual 3D panoramic image information through a picture in picture (PIP) function or a screen division function.

Further, the purchase terminal 200 may receive the 3D panoramic image, the product and service information, store information, and the like provided from the server 100 to which a corresponding used language is applied, which are provided from the server 100 according to the corresponding used language.

In addition, the purchase terminal 200 receives the 3D panoramic image information corresponding to the positional information of the purchase terminal 200, the information (alternatively the information on at least one coupon and/or gift card associated with at least one object included in the corresponding 3D panoramic image information) on at least one coupon and/gift card which interlocks with the corresponding 3D panoramic image information, the priority information for the corresponding coupon and/or gift card, and the like which are transmitted from the server 100 in response to the positional information of the purchase terminal 200 which is transmitted as above.

Moreover, the purchase terminal 200 displays the received 3D panoramic image information corresponding to the positional information of the purchase terminal 200, the information on the at least one coupon and/or gift card which interlocks with the corresponding received 3D panoramic image information, and the like. In this case, the purchase terminal 200 may display only a part among the information on at least one coupon and/or gift card which interlocks with the corresponding received 3D panoramic image information based on the received priority information for the corresponding coupon and/or gift card.

Further, when a specific coupon (alternatively, a specific gift card) is selected among the information on at least one coupon and/or gift card displayed in the purchase terminal 200, the purchase terminal 200 displays store information for at least one store where the selected specific coupon (alternatively, the gift card) is usable among the plurality objects (alternatively, stores) included in the 3D panoramic image information displayed in the purchase terminal 200. In this case, the purchase terminal 200 may display the store information for at least one store where the selected specific coupon (alternatively, the specific gift card) is usable by using the augmented reality function. Herein, the store information includes a store name, operating time information of the corresponding store, positional information of the store, a telephone number of the store, product information/service information provided by the corresponding store, and the like. Further, the product information includes a product name, a product-specific code, a product image, product description information, experience information on the product, evaluation information on the product, and the like. Further, the service information includes a service name, a service-specific code, a service basic image, service description information, experience information on the service, evaluation information on the service, and the like.

In addition, when specific store information is selected among store information for at least one store displayed in the purchase terminal 200 (alternatively, when the specific store information is selected and thereafter, a predetermined button (alternatively, a download button/purchase button) displayed to be adjacent to the corresponding specific store information is selected), the purchase terminal 200 performs an issuing function for the selected specific coupon or specific gift card or performs the issuing function after payment.

That is, when specific store information is selected among store information for at least one store displayed in the purchase terminal 200 (alternatively, when the specific store information is selected and thereafter, the predetermined download button displayed to be adjacent to the corresponding specific store information is selected), the purchase terminal 200 transmits the selected specific store information (alternatively, the selected button information) to the server 100.

Further, the purchase terminal 200 stores the specific coupon (including, for example, the discount coupon, the free coupon, and the like) usable in the corresponding specific store, which is issued from the server 100.

Further, when the specific store information is selected among store information for at least one store displayed in the purchase terminal 200 (alternatively, when the specific store information is selected and thereafter, a predetermined purchase button/payment button displayed to be adjacent to the corresponding specific store information is selected), the purchase terminal 200 performs a payment function for a specific gift card usable in a specific store corresponding to the corresponding specific store information by interlocking with the server 100, the payment server 300, and the selling terminal 400.

In addition, after performing the payment function is normally completed, the purchase terminal 200 receives the payment function performance result (alternatively, payment information) provided from the server 100 or the payment server 300. Herein, the payment function performance result (alternatively, payment information) includes specific gift card information usable in the specific store, payment date and time information, and the like.

Further, the purchase terminal 200 displays the received payment function performance result.

Further, after performing the payment function is normally completed, the purchase terminal 200 stores the specific gift card usable in the corresponding specific store, which is issued from the server 100.

Moreover, the purchase terminal 200 receives a free discount coupon, a discount coupon, a gift card of a specific shopping mall, a gift card of the traditional market, and the like additionally provided from the server 100 with the purchase of the specific gift card.

Moreover, the purchase terminal 200 stores and displays the received free discount coupon, discount coupon, gift card of the specific shopping mall, gift card of the traditional market, and the like.

Further, when specific store information is selected among the information on one or more stores where the coupon or gift card stored in the corresponding purchase terminal 200 displayed in the purchase terminal 200 may be used (alternatively, when any one is selected among the coupons or gift cards pre-stored in the purchase terminal 200), the purchase terminal 200 generates road guidance information up to a store corresponding to the corresponding specific store information from the current position of the purchase terminal 200 based on the current positional information of the purchase terminal 200 and the selected specific store information (alternatively, positional information/coupon/gift card of the specific store). In this case, the purchase terminal 200 may verify (alternatively, generate) one or more recommendation information adjacent to a path on the generated road guidance information within a predetermined distance by interlocking with the server 100. Herein, the recommendation information may be information on a store where the gift card is usable. In this case, the road guidance information may be generated in the form of the 3D panoramic image information by interlocking with the server 100.

Further, the purchase terminal 200 displays the generated road guidance information, the one or more generated recommendation information, and the like.

As described above, the purchase terminal 200 may provide the road guidance information to follow the corresponding avatar at the time of visiting the offline store by considering a moving line of the user of the purchase terminal 200 in virtual real by using the 3D panoramic image, the avatar (alternatively, emoticon), and the like to cause interest and improve user convenience.

In addition, when the user receives a specific product and/or service in the store having the selling terminal 400 and thereafter, intends to use the coupon or gift card stored in the purchase terminal 200, the purchase terminal 200 performs a use processing (alternatively, payment processing) function for the coupon or gift card stored in the purchase terminal 200 by interlocking among the server 100, the payment server 300, and the purchase terminal 400.

Further, when the use processing for the coupon or gift card stored in the purchase terminal 200 is completed, the purchase terminal 200 discards the coupon or gift card stored in the purchase terminal 200 to be prevented from being doubly used (alternatively, reused).

In addition, after performing the payment function is normally completed, when there is the balance of the corresponding gift card, the purchase terminal 200 displays the gift card including a usable price (alternatively, balance information) transmitted from the server 100, and the like or outputs the gift card including the usable price (alternatively, balance information) transmitted from the server 100 as a printed matter such as a receipt provided from the selling terminal 400, and the like. In this case, the usable price may be a price acquired by subtracting a payment price depending on the performing of the payment function from a just previously (alternatively, previous) usable price.

Moreover, after performing the payment function is normally completed, the purchase terminal 200 may receive the predetermined point and/or discount coupon transmitted (alternatively, issued) from the selling terminal 400.

Further, the purchase terminal 200 displays or stores the received predetermined point and/or discount coupon.

Further, when the corresponding expiration date reaches a predetermined date (for example, one month from the expiration date, 15 days from the expiration date, 7 days from the expiration date, 3 days from the expiration date, 1 day from the expiration date, and the like) based on the expiration date included in the gift card and a usable price (alternatively, balance) remains in the corresponding gift card information, the purchase terminal 200 displays information including information indicating that the balance remains in the gift card, the expiration date, and the like every predetermined period. In this case, the information including information indicating that the balance remains in the gift card, the expiration date, and the like may be provided from the server 100.

In addition, the purchase terminal 200 receives the experience information for the specific product/service depending on the user input of the corresponding purchase terminal 200, the evaluation information for the specific product/service, and the like.

In this case, the purchase terminal 200 is configured to receive experience information, evaluation information, and the like within a predetermined number with respect to a specific product/service to prevent various experience information or evaluation information from being provided by the same user, thereby improving reliability for the corresponding experience information, the evaluation information, and the like.

Further, the purchase terminal 200 transmits the received experience information for the product/service, the received evaluation information for the product/service, the received identification information of the purchase terminal 200, and the like to the server 100.

The payment server 300 communicates with the server 100, the purchase terminal 200, the selling terminal 400, and the like.

Further, the payment server 300 performs the payment function for the gift card usable in the specific store selected by the purchase terminal 200 by interlocking with the purchase terminal 200, the server 100, the selling terminal 400, and the like. In this case, at the time of performing the payment function, the payment server 300 may apply a predetermined discount price to a cover price corresponding to the gift card usable in the specific store to perform a payment function for a price to which the discount price is applied to the cover price.

In addition, after performing the payment function is normally completed, the payment server 300 provides the payment function performance result (alternatively, payment information) to the purchase terminal 200. Herein, the payment function performance result (alternatively, payment information) includes specific gift card information usable in the specific store, payment date and time information, and the like.

In addition, when the user receives a specific product and/or service for which the gift card is usable in the store having the selling terminal 400 and thereafter, intends to use the gift card stored in the purchase terminal 200, the payment server 300 performs a use processing (alternatively, payment processing) function for the gift card stored in the purchase terminal 200 by interlocking among the purchase terminal 200, the server 100, and the purchase terminal 400.

Herein, the selling terminal 400 may be a point of sales (POS) terminal provided in a store, and the like.

Further, the selling terminal 400 is provided (alternatively, installed) in any store.

Further, the selling terminal 400 performs a member joining procedure for the user of the selling terminal 400 by interlocking with the server 100.

In addition, at the time of performing the member joining procedure, the selling terminal 400 may normally complete the member joining procedure for the server 100 only by completing an authentication function through an own authentication means (including, for example, a mobile phone, a credit card, an ipin, and the like).

Further, the selling terminal 400 communicates with the server 100, the purchase terminal 200, the payment server 300, and the like.

Moreover, the selling terminal 400 performs the payment function for the gift card usable in the store at which the corresponding selling terminal 400 selected by the purchase terminal 200 is positioned by interlocking with the purchase terminal 200, the server 100, the payment server 300, and the like.

Further, the selling terminal 400 receives the payment function performance result (alternatively, payment information) depending on the performance of the payment function transmitted from the server 100 or the payment server 300, the selling quantity of the gift cards issued from the server 100, and the like.

In addition, the selling terminal 400 may perform a product inventory management function in a store associated with the selling terminal 400 based on the received payment function performing result, the selling quantity of the gift cards, and the like.

Further, the selling terminal 400 may perform a marketing function for the product or service provided by the store associated with the corresponding selling terminal 400 by applying custom relation management (CRM) marketing based on the received payment function performing result, the selling quantity of the gift cards, and the like.

In addition, when the user receives a specific product and/or service in the store having the selling terminal 400 and thereafter, intends to use the coupon/gift card stored in the purchase terminal 200, the selling terminal 400 recognizes the coupon/gift card stored in the purchase terminal 200 in the barcode type, the QR code type, and the like.

That is, when the user of the purchase terminal 200 having the coupon/gift card intends to purchase one or more products sold in the corresponding store by visiting to the store having the selling terminal 400 or perform the payment function through the corresponding coupon/gift card in order to pay a reward for the corresponding service after receiving the service provided in the corresponding store, the selling terminal 400 recognizes the unique number (alternatively, information on the corresponding gift card) of the coupon/gift card stored in (alternatively, issued from) the purchase terminal 200. In this case, the selling terminal 400 may recognize the corresponding coupon/gift card through a recognition unit (including, for example, a barcode recognizing unit, a QR code recognizing unit, and the like) provided in the corresponding selling terminal 400.

Further, the selling terminal 400 performs the use processing (alternatively, payment processing) function for the coupon/gift card stored in the purchase terminal 200 by interlocking among the purchase terminal 200, the server 100, and the payment server 300 based on the recognized coupon/gift card (alternatively, the unique number of the coupon/gift card).

Moreover, the selling terminal 400 processes (alternatively, switches/changes) into use completion state for the corresponding coupon/gift card transmitted (alternatively, issued) to the purchase terminal 200.

Further, after the use processing (alternatively, payment function performing) for the corresponding coupon/gift card is completed, the selling terminal 400 displays a use processing result for the corresponding coupon/gift card. Herein, the use processing result for the coupon/gift card includes a store name, a store position, a store contact, product and service information, payment date and time information, price information for each ordered product/service, and the like.

Further, after the use processing (alternatively, payment function performing) for the corresponding coupon/gift card is completed, the selling terminal 400 outputs a use processing result for the coupon/gift card as the printed matter such as the receipt.

In addition, after the use processing (alternatively, payment function performing) for the corresponding gift card is completed, when there is the balance of the corresponding gift card, the selling terminal 400 receives information including the usable price (alternatively, balance information/updated usable price) in the corresponding gift card transmitted from the server 100.

Further, the selling terminal 400 displays the information including the usable price in the corresponding received gift card or outputs the information as the printed matter such as the receipt.

Moreover, after the use processing (alternatively, payment function performing) for the corresponding gift card is completed, the selling terminal 400 transmits (alternatively, issues) a predetermined point and/or discount coupon to the purchase terminal 200. Herein, the point and/or discount coupon may be included together with the use processing result for the gift card or included in the issued receipt.

As described above, when an object to be found is searched in the image information on the road view for the street on which the shopping mall including the store where the products are displayed or the store is positioned, corresponding image information where a product or a service corresponding to the searched object exists may be displayed.

Further, as described above, in image information on a road view of a street on which a shopping mall including stores at which products are displayed or stores are positioned, a coupon or gift card usable in a store included in the corresponding image information may be displayed, one or more stores at which the coupon or gift card can be used may be displayed when the coupon or gift card is selected, and the corresponding coupon may be issued to a terminal or a payment function for the corresponding gift card may be performed and thereafter, the corresponding gift card of which payment is completed may be issued to the terminal.

Hereinafter, a control method of a system for providing shopping information based on augmented reality according to the present invention will be described in detail with reference to FIGS. 1 to 13.

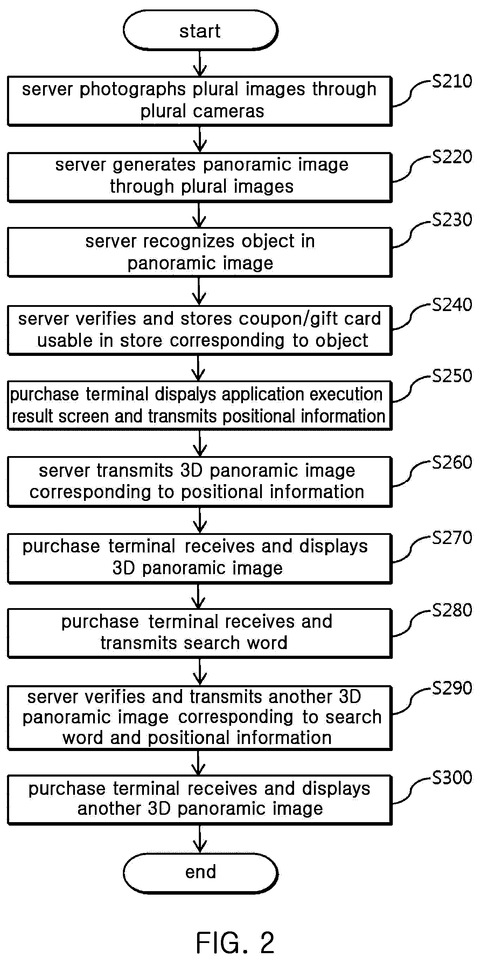

FIG. 2 is a flowchart illustrating a control method of a system for providing shopping information based on augmented reality according to a first embodiment of the present invention.

First, the server 100 photographs a first image and a second image including one or more offline stores, products within the corresponding stores, and the like through a plurality of camera (not illustrated) included in the corresponding server 100. Herein, the stores include department stores, shopping malls, outlets, restaurants, hospitals, buildings (alternatively, structures), and the like. In this case, image information photographed through the plurality of cameras includes fixed real-time image information photographed through a camera (for example, CCTVs provided in shopping malls, stores, and the like) preinstalled at a specific position, mobile recorded image information photographed through a camera installed in a mobile device (alternatively, a road view device (not illustrated)), real-time image information photographed through a camera installed in a mobile device, and the like.

As an example, the server 100 photographs an 11-th image and a 12-th image including a plurality of stores in which a plurality of products in a large shopping mall is arranged, through an 11-th camera and a 12-th camera, respectively.

As another example, the server 100 photographs a 21-th image and a 22-th image including a plurality of offline stores through a 21-th camera and a 22-th camera, respectively (S210).

Thereafter, the server 100 acquires an overlapping area in which the first image and the second image overlap with each other based on the orientation of pixels with respect to the photographed first and second images.

Further, the server 100 generates a panoramic image (alternatively, a 3D panoramic image/panoramic image information) by synthesizing the first image and the second image based on the acquired overlapping area. In this case, the server 100 may generate the panoramic image by synthesizing the photographed first and second images by various known synthesizing methods. Further, the server 100 may generate each panoramic image per used language.

As an example, the server 100 generates a first 3D panoramic image by synthesizing the 11-th image and the 12-th image based on the overlapping area in which the photographed 11-th and 12-th images overlap with each other.

As another example, the server 100 generates a second 3D panoramic image by synthesizing the 21-th image and the 22-th image based on the overlapping area in which the photographed 21-th and 22-th images overlap with each other (S220).

Thereafter, the server 100 recognizes one or more objects included in the panoramic image, respectively. Herein, the object may be each store positioned on the offline.

That is, the server 100 recognizes one or more stores included in the panoramic image, respectively.

As an example, the server 100 recognizes first to sixth stores in the large shopping mall included in the first 3D panoramic image, respectively.

As another example, the server 100 recognizes a plurality of stores (including, for example, a first physician, a first pharmacy, a first convenience store, a first car, a first plastic surgery, a second plastic surgery, a second pharmacy, a first orthopedic surgery, a second convenience store, and the like positioned on the offline) included in the second 3D panoramic image, respectively (S230).

Thereafter, the server 100 verifies one or more coupons and/or gift cards (alternatively, coupons/gift cards usable for each object) usable in the stores corresponding to one or more recognized objects.

Further, the server 100 stores information (alternatively, information on coupons/gift cards usable for each object) on one or more coupons and/or gift cards usable in the verified object by interlocking with the panoramic image.

As an example, the server 100 verifies a first coupon and a second coupon usable in a first store in the shopping mall, the second coupon and a first gift card usable in a second store, the first coupon, the second coupon, and a third coupon usable in a third store, the first gift card and a second gift card usable in a fourth store, the third coupon and the first gift card usable in a fifth store, and the second coupon and the second gift card usable in a sixth store, respectively, and stores the information on coupons/gift cards for the first to sixth stores by interlocking with the first 3D panoramic image.

As another example, the server 100 verifies a first coupon usable in the first physician, a second coupon and a first gift card usable in the first convenience store and the second convenience store, a third coupon and a second gift card usable in the first plastic surgery and the second plastic surgery, and a first coupon and a second coupon usable in the first orthopedic surgery, respectively, and stores the information on coupons/gift cards for each store by interlocking with the second 3D panoramic image (S240).

Thereafter, when a pre-installed application is executed on the purchase terminal 200, the purchase terminal 200 displays an application execution result screen. Herein, the application execution result screen includes a panoramic image information item for displaying the 3D panoramic image, a search item for searching the 3D panoramic image, a setting item for setting a function of the application, a my-page item for verifying coupon and product information which is issued or purchased, and the like. In this case, the purchase terminal 200 communicates with the server 100 associated with the corresponding application in a background state.

Further, when the application pre-installed in the purchase terminal 200 is executed or when a predetermined panoramic image information item is selected on the application execution result screen, the purchase terminal 200 transmits the positional information of the purchase terminal 200, the identification information of the purchase terminal 200, and the like to the server 100. Herein, the identification information of the purchase terminal 200 includes an MDN, a mobile IP, a mobile MAC, subscriber identity module (Sim) card unique information, a serial number, and the like.

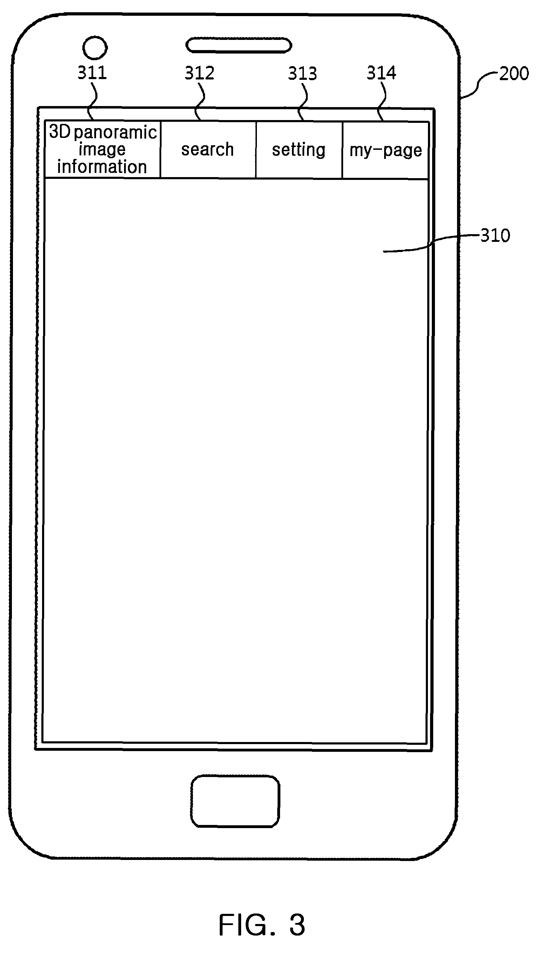

As an example, as illustrated in FIG. 3, when a shopping information application pre-installed in the purchase terminal 200 is executed, the purchase terminal 200 displays a shopping information screen 310 and communicates with the server 100 associated with the shopping information application in the background state. Herein, the shopping information screen 310 includes a 3D panoramic image information item 311, a search item 312, a setting item 313, a my-page item 314, and the like. Further, the purchase terminal 200 transmits the positional information (for example, 1234-gil, Apgujeong-ro, Gangnam-gu, Seoul, Korea) of the purchase terminal 200, the identification information of the purchase terminal 200, and the like to the server 100 (S250).

Thereafter, the server 100 receives the positional information of the purchase terminal 200, the identification information of the purchase terminal 200, and the like which are transmitted from the purchase terminal 200.

Further, the server 100 verifies the 3D panoramic image information corresponding to the positional information of the purchase terminal 200 in the plurality of pre-stored 3D panoramic image information.

Further, the server 100 transmits, to the purchase terminal 200, the verified 3D panoramic image information corresponding to the positional information of the purchase terminal 200.

As an example, the server 100 transmits, to the purchase terminal 200, the 3D panoramic image information (alternatively, the first 3D panoramic image information) of the ABCD large shopping mall corresponding to the positional information (for example, 1234-gil, Apgujeong-ro, Gangnam-gu, Seoul, Korea) of the purchase terminal 200 in the plurality of pre-stored 3D panoramic image information.

As another example, the server 100 transmits, to the purchase terminal 200, the second 3D panoramic image information corresponding to the positional information (for example, 1234-gil, Apgujeong-ro, Gangnam-gu, Seoul, Korea) of the purchase terminal 200 in the plurality of pre-stored 3D panoramic image information. Herein, the second 3D panoramic image information may be road view image information corresponding to the positional information of the purchase terminal 200 (S260).

Thereafter, the purchase terminal 200 receives the 3D panoramic image information corresponding to the positional information of the purchase terminal 200 transmitted from the server 100 in response to the transmitted positional information of the purchase terminal 200.

Further, the purchase terminal 200 displays the 3D panoramic image information corresponding to the received positional information of the purchase terminal 200.

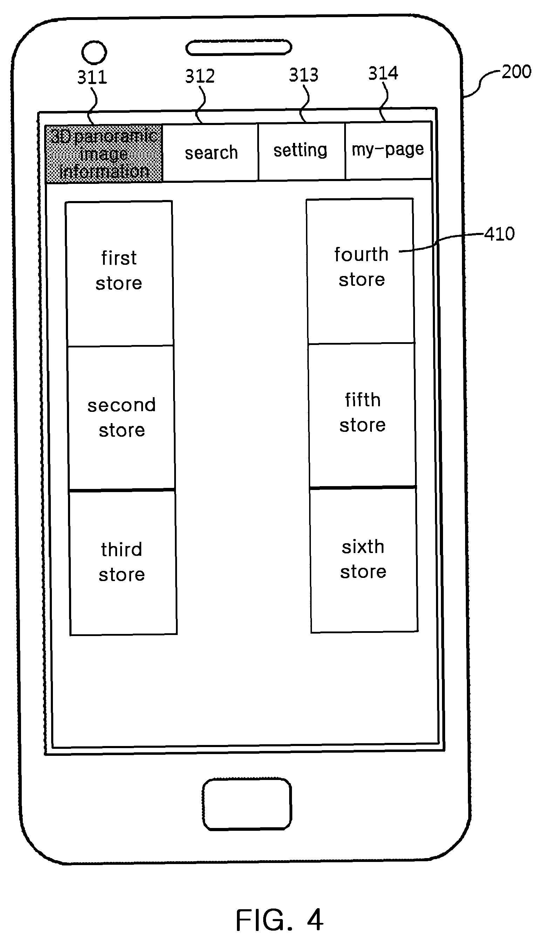

As an example, as illustrated in FIG. 4, the purchase terminal 200 displays 3D panoramic image information 410 of the ABCD large shopping mall corresponding to the positional information (for example, 1234-gil, Apgujeong-ro, Gangnam-gu, Seoul, Korea) of the purchase terminal 200 transmitted from the server 100 in response to the transmitted positional information of the purchase terminal 200.

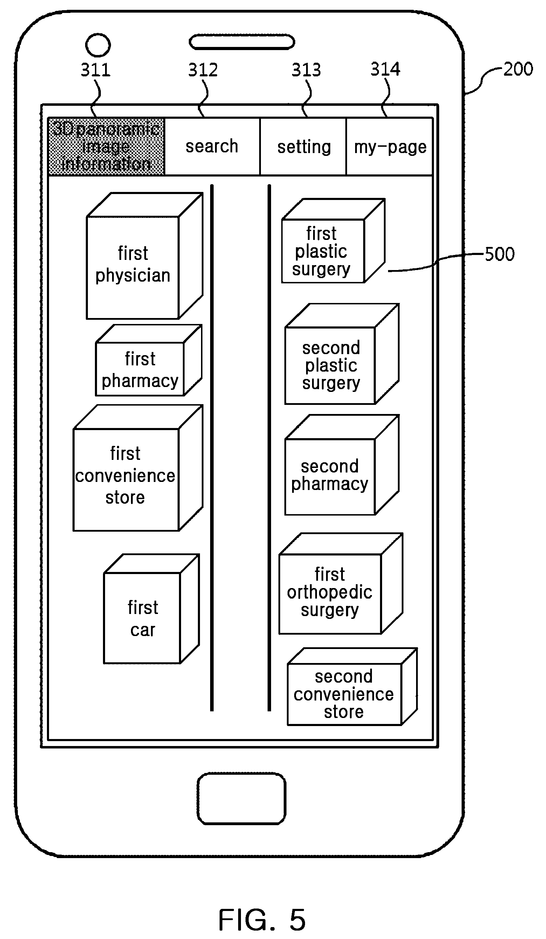

As another example, as illustrated in FIG. 5, the purchase terminal 200 displays the second 3D panoramic image information 500 which is the road view image information corresponding to the positional information (for example, 1234-gil, Apgujeong-ro, Gangnam-gu, Seoul, Korea) of the purchase terminal 200, which is transmitted from the server 100 in response to the transmitted positional information of the purchase terminal 200 (S270).

Thereafter, when the search item is selected on the application execution result screen displayed in the purchase terminal 200 (alternatively, when the search item is selected on the application execution result screen while the 3D panoramic image information corresponding to the received positional information of the purchase terminal 200 is displayed), the purchase terminal 200 displays a search word input screen for inputting (alternatively, receiving) a search word corresponding to the selected search item.

Further, the purchase terminal 200 receives a search word according to a user input (alternatively, a user touch).

Further, the purchase terminal 200 transmits the received search word, member information pre-stored in the purchase terminal 200, positional information of the purchase terminal 200, identification information of the purchase terminal 200, and the like to the server 100. Herein, the member information includes a name, an address, a used language, and the like associated with a user of the corresponding purchase terminal 200.

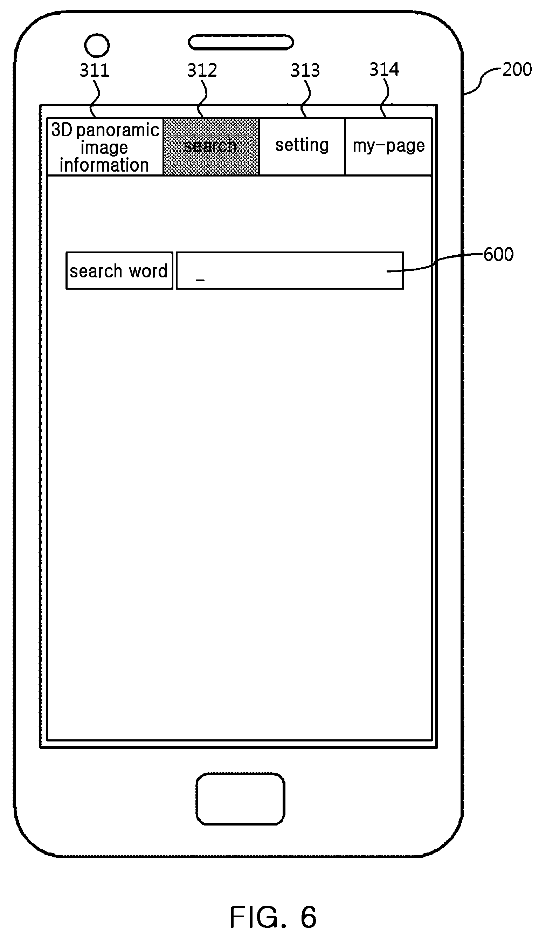

As an example, when the search item 312 is selected while the 3D panoramic image information 410 of the ABCD large shopping mall of FIG. 4 is displayed, the purchase terminal 200 displays a search word input screen 600 corresponding to the selected search item 312 as illustrated in FIG. 6. Further, when the purchase terminal 200 receives a search word (including, for example, sports goods, and the like) according to the user input, the purchase terminal 200 transmits, to the server 100, the received search word (including, for example, sports goods, and the like), the member information (including, for example, a name (e.g., Hong Kil Dong), an address (e.g., 123, Palil-ro, Nanyang-si, Hanam-sung, China), a used language (e.g., Chinese), and the like), the positional information (for example, 1234-gil, Apgujeong-ro, Gangnam-gu, Seoul, Korea) of the purchase terminal 200, the identification information of the purchase terminal 200, and the like.

As another example, when the search item 312 is selected on the shopping information screen 310 illustrated in FIG. 3, as illustrated in FIG. 6, the purchase terminal 200 displays a search word input screen 600 corresponding to the selected search item 312. Further, when the purchase terminal 200 receives a search word (including, for example, a plastic surgery, and the like) according to the user input, the purchase terminal 200 transmits, to the server 100, the received search word (including, for example, the plastic surgery, and the like), the member information (including, for example, a name (e.g., Hong Kil Dong), an address (e.g., 123, Palil-ro, Nanyang-si, Hanam-sung, China), a used language (e.g., Chinese), and the like), the positional information (for example, 1234-gil, Apgujeong-ro, Gangnam-gu, Seoul, Korea) of the purchase terminal 200, the identification information of the purchase terminal 200, and the like (S280).

Thereafter, the server 100 receives the search word, the member information pre-stored in the purchase terminal 200, the positional information of the purchase terminal 200, the identification information of the purchase terminal 200, and the like which are transmitted from the purchase terminal 200.

In addition, the server 100 verifies the search word and the 3D panoramic image information corresponding to the positional information of the purchase terminal 200 among the plurality of pre-stored 3D panoramic image information and transmits, to the purchase terminal 200, the search word and the 3D panoramic image information corresponding to the positional information of the purchase terminal 200 which are verified. In this case, the server 100 may verify the 3D panoramic image information by additionally reflecting the received member information in addition to the search word and the positional information of the purchase terminal 200. Further, when the verified 3D panoramic image information is plural, the server 100 may transmit, to the purchase terminal 200, the plurality of verified 3D panoramic image information, distance information between the store and the purchase terminal 200 included in each 3D panoramic image information, and the like.

As an example, the server 100 transmits, to the purchase terminal 200, Chinese type 3-1-st panoramic image information including a 7-th store and an 8-th store selling the sport goods corresponding to the search word in the ABCD large shopping mall, which corresponds to the search word (including, for example, the sports goods, and the like), the used language (e.g., Chinese) in the member information, and the positional information (for example, 1234-gil, Apgujeong-ro, Gangnam-gu, Seoul, Korea) of the purchase terminal 200), Chinese type 3-2-nd panoramic image information including a 9-th store, distance information (including, for example, distances up to the 7-th store and the 8-th store from the positional information of the purchase terminal 200 are 100 m, a distance up to the 9-th store is 150 m, and the like) up to the stores (for example, the 7-th store and the 8-th store) in the 3-1-th panoramic image information and the store (for example, the 9-th store) in the 3-2-nd panoramic image information according to the positional information of the purchase terminal 200, and the like among the plurality of pre-stored 3D panoramic image information (alternatively, the plurality of pre-stored 3D panoramic image information for each language).

As another example, the server 100 transmits, to the purchase terminal 200, fourth 3D panoramic image information including the first plastic surgery and the second plastic surgery corresponding to the plastic surgery which is the search word in the road view corresponding to the search word (including, for example, the plastic surgery, and the like) and the positional information (for example, 1234-gil, Apgujeong-ro, Gangnam-gu, Seoul, Korea) of the purchase terminal 200 in the plurality of pre-stored 3D panoramic image information.

Thereafter, the purchase terminal 200 receives the 3D panoramic image information corresponding to the search word and the positional information of the purchase terminal 200 transmitted from the server 100 in response to the transmitted search word.

Further, the purchase terminal 200 displays the received 3D panoramic image information corresponding to the search word and the positional information of the purchase terminal 200. In this case, the purchase terminal 200 may display a predetermined emoticon or icon in an area adjacent to a store corresponding to the search word, provide a highlight effect to the corresponding store, provides an effect to display an outer contour of the corresponding store with a predetermined color, or provide an effect to provide an augmented reality function to easily verify the store corresponding to the search word.

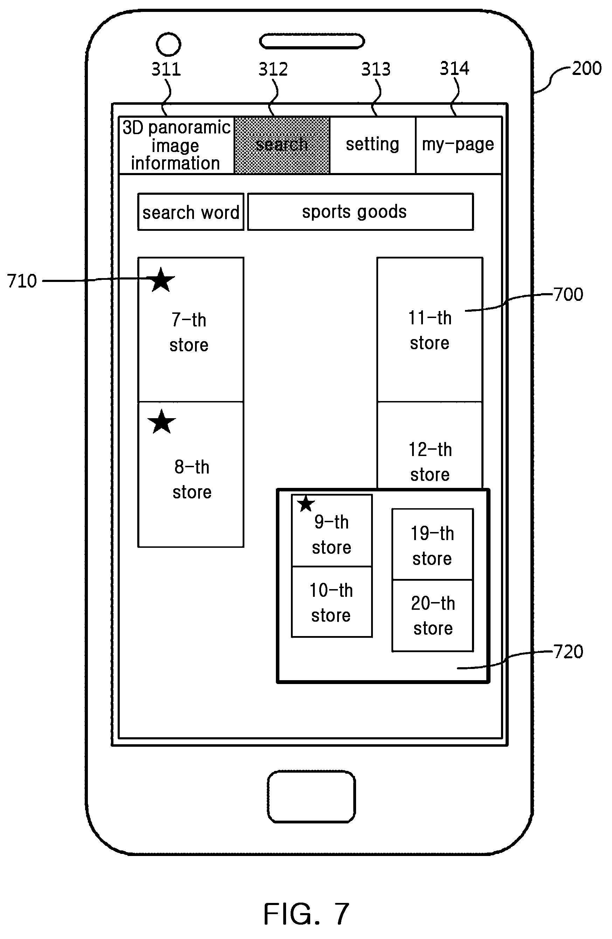

As an example, as illustrated in FIG. 7, the purchase terminal 200 displays 3-1-st panoramic image information 700 including a 7-th store and an 8-th store selling the sport goods corresponding to the search word in the ABCD large shopping mall, which is transmitted from the server 100 in response to the search word (including, for example, the sports goods, and the like), the used language (e.g., Chinese) in the member information, the positional information (for example, 1234-gil, Apgujeong-ro, Gangnam-gu, Seoul, Korea) of the purchase terminal 200, and the like which are received. In this case, the purchase terminal 200 may display a predetermined icon 710 in each of the 7-th store and the 8-th store selling the sport goods as the search word. Further, the purchase terminal 200 displays 3-2-nd panoramic image information 720 including the 9-th store selling the sport goods corresponding to the search word in the ABCD large shopping mall through a PIP function.

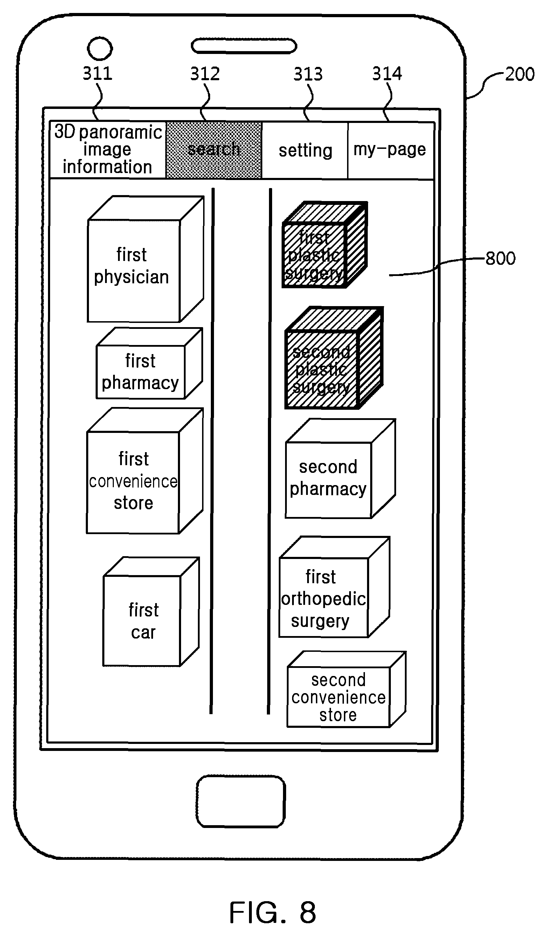

As another example, as illustrated in FIG. 8, the purchase terminal 200 displays fourth 3D panoramic image information 800 including the first plastic surgery and the second plastic surgery which are the plastic surgery corresponding to the search word in the road view transmitted from the server 100 in response to the search word (including, for example, the plastic surgery, and the like) and the positional information (for example, 1234-gil, Apgujeong-ro, Gangnam-gu, Seoul, Korea) of the purchase terminal 200 which are transmitted. In this case, the purchase terminal 200 may display outer contours of the first and second plastic surgery which are the stores corresponding to the plastic surgery which is the search word with thick and predetermined color (for example, displayed with a red deviant crease line) (S300).

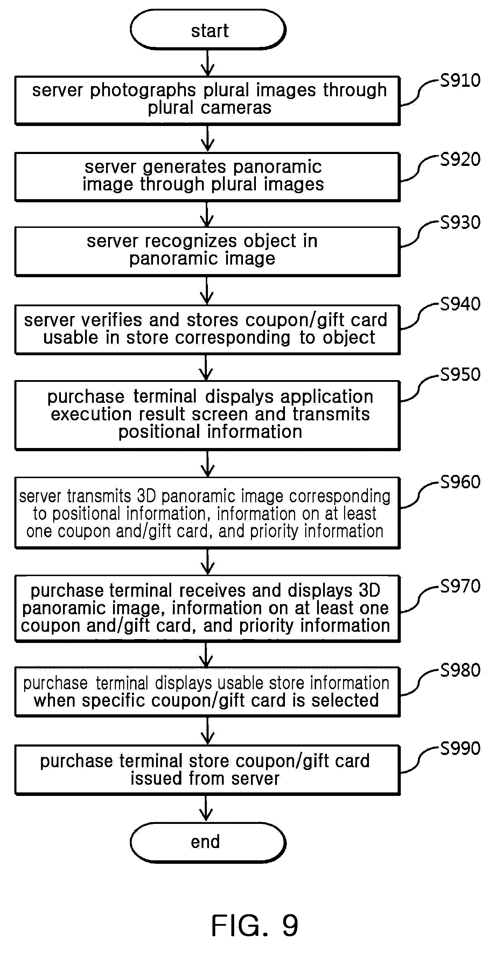

FIG. 9 is a flowchart illustrating a control method of a system for providing shopping information based on augmented reality according to a second embodiment of the present invention.

First, the server 100 photographs a first image and a second image including one or more offline stores, products within the corresponding stores, and the like through a plurality of camera (not illustrated) included in the corresponding server 100. Herein, the stores include department stores, shopping malls, outlets, restaurants, hospitals, buildings (alternatively, structures), and the like. In this case, image information photographed through the plurality of cameras includes fixed real-time image information photographed through a camera (for example, CCTVs provided in shopping malls, stores, and the like) preinstalled at a specific position, mobile recorded image information photographed through a camera installed in a mobile device (alternatively, a road view device (not illustrated)), real-time image information photographed through a camera installed in a mobile device, and the like.

As an example, the server 100 photographs an 11-th image and a 12-th image including a plurality of stores in which a plurality of products in a large shopping mall is arranged, through an 11-th camera and a 12-th camera, respectively.

As another example, the server 100 photographs a 21-th image and a 22-th image including a plurality of offline stores through a 21-th camera and a 22-th camera, respectively (S910).

Thereafter, the server 100 acquires an overlapping area in which the first image and the second image overlap with each other based on the orientation of pixels with respect to the photographed first and second images.

Further, the server 100 generates a panoramic image (alternatively, a 3D panoramic image/panoramic image information) by synthesizing the first image and the second image based on the acquired overlapping area. In this case, the server 100 may generate the panoramic image by synthesizing the photographed first and second images by various known synthesizing methods. Further, the server 100 may generate each panoramic image per used language.

As an example, the server 100 generates a first 3D panoramic image by synthesizing the 11-th image and the 12-th image based on the overlapping area in which the photographed 11-th and 12-th images overlap with each other.

As another example, the server 100 generates a second 3D panoramic image by synthesizing the 21-th image and the 22-th image based on the overlapping area in which the photographed 21-th and 22-th images overlap with each other (S920).

Thereafter, the server 100 recognizes one or more objects included in the panoramic image, respectively. Herein, the object may be each store positioned on the offline.

That is, the server 100 recognizes one or more stores included in the panoramic image, respectively.

As an example, the server 100 recognizes first to sixth stores in the large shopping mall included in the first 3D panoramic image, respectively.

As another example, the server 100 recognizes a plurality of stores (including, for example, a first physician, a first pharmacy, a first convenience store, a first car, a first plastic surgery, a second plastic surgery, a second pharmacy, a first orthopedic surgery, a second convenience store, and the like positioned on the offline) included in the second 3D panoramic image, respectively (S930).

Thereafter, the server 100 verifies one or more coupons and/or gift cards (alternatively, coupons/gift cards usable for each object) usable in the stores corresponding to one or more recognized objects.

Further, the server 100 stores information (alternatively, information on coupons/gift cards usable for each object) on one or more coupons and/or gift cards usable in the verified object by interlocking with the panoramic image.

As an example, the server 100 verifies a first coupon and a second coupon usable in a first store in the shopping mall, the second coupon and a first gift card usable in a second store, the first coupon, the second coupon, and a third coupon usable in a third store, the first gift card and a second gift card usable in a fourth store, the third coupon and the first gift card usable in a fifth store, and the second coupon and the second gift card usable in a sixth store, respectively, and stores the information on coupons/gift cards for the first to sixth stores by interlocking with the first 3D panoramic image.

As another example, the server 100 verifies a first coupon usable in the first physician, a second coupon and a first gift card usable in the first convenience store and the second convenience store, a third coupon and a second gift card usable in the first plastic surgery and the second plastic surgery, and a first coupon and a second coupon usable in the first orthopedic surgery, respectively, and stores the information on coupons/gift cards for each store by interlocking with the second 3D panoramic image (S940).

Thereafter, when a pre-installed application is executed on the purchase terminal 200, the purchase terminal 200 displays an application execution result screen. Herein, the application execution result screen includes a panoramic image information item for displaying the 3D panoramic image, a search item for searching the 3D panoramic image, a setting item for setting functions of the application, a my-page item for confirming information on issued or purchased coupons and products, and the like. In this case, the purchase terminal 200 communicates with the server 100 associated with the corresponding application in a background state.

Further, when the application pre-installed on the purchase terminal 200 is executed or when the predetermined panoramic image information item is selected from the application execution result screen, the purchase terminal 200 transmits positional information of the purchase terminal 200, identification information of the purchase terminal 200, and the like to the server 100. Herein, the identification information of the purchase terminal 200 includes an MDN, a mobile IP, a mobile MAC, subscriber identity module (Sim) card unique information, a serial number, and the like.

As an example, as illustrated in FIG. 3, when a shopping information application pre-installed in the purchase terminal 200 is executed, the purchase terminal 200 displays a shopping information screen 310 and communicates with the server 100 associated with the shopping information application in the background state. Herein, the shopping information screen 310 includes a 3D panoramic image information item 311, a search item 312, a setting item 313, a my-page item 314, and the like. Further, the purchase terminal 200 transmits the positional information (for example, 1234-gil, Apgujeong-ro, Gangnam-gu, Seoul, Korea) of the purchase terminal 200, the identification information of the purchase terminal 200, and the like to the server 100 (S950).

Thereafter, the server 100 receives the positional information of the purchase terminal 200, the identification information of the purchase terminal 200, and the like which are transmitted from the purchase terminal 200.

Further, the server 100 verifies the 3D panoramic image information corresponding to the positional information of the purchase terminal 200 in the plurality of pre-stored 3D panoramic image information.

Further, the server 100 verifies information on at least one coupon and/or gift card related with at least one object included in the corresponding stored 3D panoramic image information by interlocking with the verified 3D panoramic image information corresponding to the positional information of the purchase terminal 200. In this case, the server 100 may also verify priority information on the corresponding coupon and/or gift card together.

Further, the server 100 transmits, to the purchase terminal 200, the verified 3D panoramic image information corresponding to the positional information of the purchase terminal 200, the information on at least one coupon and/or gift card interlocking with the corresponding 3D panoramic image information (alternatively, the information on at least one coupon and/or gift card related with at least one object included in the corresponding 3D panoramic image information), the priority information on the corresponding coupon and/or gift card, and the like.

As an example, the server 100 verifies the 3D panoramic image information (alternatively, the first 3D panoramic image information) of the ABCD large shopping mall corresponding to the positional information (for example, 1234-gil, Apgujeong-ro, Gangnam-gu, Seoul, Korea) of the purchase terminal 200 in the plurality of pre-stored 3D panoramic image information. Further, the server 100 verifies the first to sixth stores included in the 3D panoramic image information of the verified ABCD large shopping mall and verifies at least one coupon/gift card related with the verified first to sixth stores (including, for example, the first coupon and the second coupon usable in the first store in the shopping mall, the second coupon and the first gift card usable in the second store, the first coupon, the second coupon and the third coupon usable in the third store, the first gift card and the second gift card usable in the fourth store, the third coupon and the first gift card usable in the fifth store, and second coupon and the second gift card usable in the sixth store, and the like). Further, the server 100 verifies priority information (for example, including first ranking: the third coupon, second ranking: the first coupon and the first gift card, third ranking: the second coupon and the second gift card, and the like) on at least one coupon and/or gift card related with the verified first to sixth stores. Further, the server 100 transmits the 3D panoramic image information (alternatively, the first 3D panoramic image information) of the ABCD large shopping mall corresponding to the verified positional information (for example, 1234-gil, Apgujeong-ro, Gangnam-gu, Seoul, Korea) of the purchase terminal 200, the information on the third coupon of which the priority information is the first ranking in at least one coupon/gift card related with the verified first to sixth stores, and the like to the purchase terminal 200.

As another example, the server 100 verifies the second 3D panoramic image information corresponding to the positional information (for example, 1234-gil, Apgujeong-ro, Gangnam-gu, Seoul, Korea) of the purchase terminal 200 in the plurality of pre-stored 3D panoramic image information. Further, the server 100 verifies a plurality of stores included in the verified second 3D panoramic image information, and verifies at least one coupon/gift card related with the plurality of verified stores (for example, including a first coupon usable in the first physician, a second coupon and a first gift card usable in the first convenience store and the second convenience store, a third coupon and a second gift card usable in the first plastic surgery and the second plastic surgery, the first coupon and the second coupon usable in the first orthopedic surgery, and the like). Further, the server 100 verifies priority information (for example, including first ranking: the second gift card, second ranking: the second coupon, third ranking: the first coupon, the third coupon, and the first gift card, and the like) on at least one coupon and/or gift card related with the plurality of verified stores. Further, the server 100 transmits the second 3D panoramic image information corresponding to the verified positional information (for example, 1234-gil, Apgujeong-ro, Gangnam-gu, Seoul, Korea) of the purchase terminal 200, the information on at least one coupon and/or gift card related with the plurality of stores, the priority information on at least one coupon and/or gift card related with the plurality of stores, and the like to the purchase terminal 200 (S960).

Thereafter, the purchase information 200 receives the 3D panoramic image information corresponding to the positional information of the purchase terminal 200 which is transmitted from the server 100 in response to the positional information of the purchase terminal 200 transmitted above, the information on at least one coupon and/or gift card interlocking with the corresponding 3D panoramic image information (alternatively, the information on at least one coupon and/or gift card related with at least one object included in the corresponding 3D panoramic image information), the priority information on the corresponding coupon and/or gift card, and the like.

Further, the purchase terminal 200 displays the received 3D panoramic image information corresponding to the positional information of the purchase terminal 200, the received information on at least one coupon and/or gift card interlocking with the corresponding 3D panoramic image information, and the like. In this case, the purchase terminal 200 may also display only a part of the received information on at least one coupon and/or gift card interlocking with the corresponding 3D panoramic image information based on the received priority information on the corresponding coupon and/or gift card.

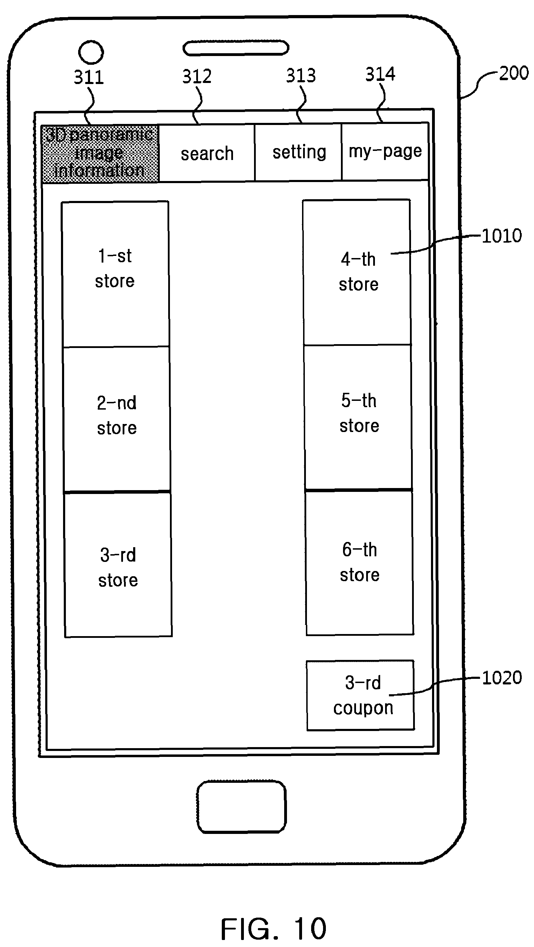

As an example, as illustrated in FIG. 10, the purchase terminal 200 displays 3D panoramic image information 1010 (alternatively, the first 3D panoramic image information) of the ABCD large shopping mall corresponding to the positional information (for example, 1234-gil, Apgujeong-ro, Gangnam-gu, Seoul, Korea) of the purchase terminal 200 which is transmitted from the server 100 in response to the transmitted positional information of the purchase terminal 200, information 1020 on the third coupon of which the priority information is the first ranking in at least one coupon/gift card related with the verified first to sixth stores, and the like.

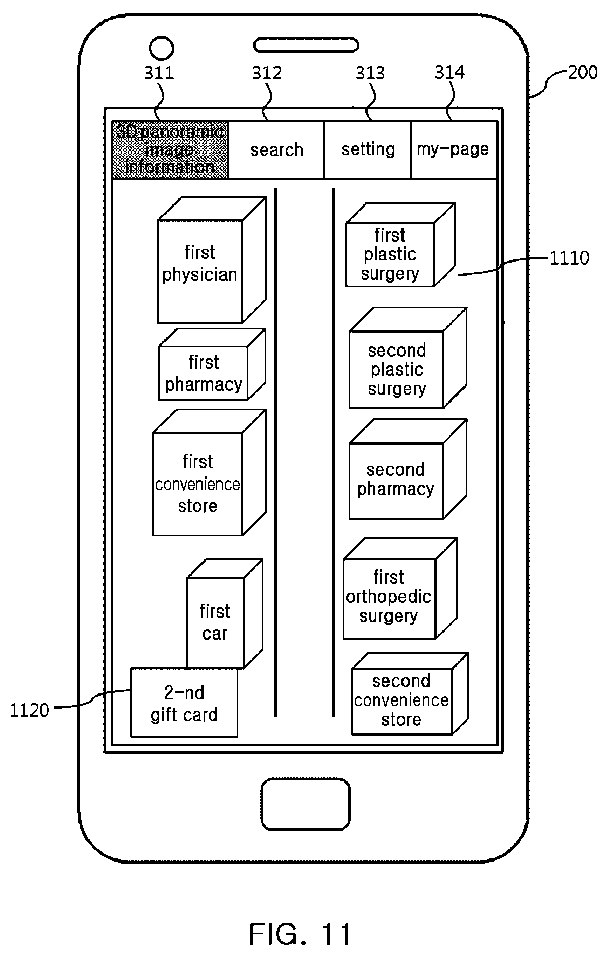

As another example, the purchase terminal 200 receives the second 3D panoramic image information corresponding to the positional information (for example, 1234-gil, Apgujeong-ro, Gangnam-gu, Seoul, Korea) of the purchase terminal 200 which is transmitted from the server 100 in response to the transmitted positional information of the purchase terminal 200, the information on at least one coupon/gift card related with the plurality of stores (for example, including a first coupon usable in the first physician, a second coupon and a first gift card usable in the first convenience store and the second convenience store, a third coupon and a second gift card usable in the first plastic surgery and the second plastic surgery, the first coupon and the second coupon usable in the first orthopedic surgery, and the like), the priority information (for example, including first ranking: the second gift card, second ranking: the second coupon, third ranking: the first coupon, the second coupon, and the first gift card, and the like) on at least one coupon and/or gift card related with the plurality of stores, and the like. As illustrated in FIG. 11, the purchase terminal 200 displays the second 3D panoramic image information 1110 corresponding to the positional information (for example, 1234-gil, Apgujeong-ro, Gangnam-gu, Seoul, Korea) of the purchase terminal 200 in the received information. As illustrated in FIG. 11, the purchase terminal 200 displays the second 3D panoramic image 1110 information corresponding to the positional information (for example, 1234-gil, Apgujeong-ro, Gangnam-gu, Seoul, Korea) of the purchase terminal 200 in the received information. Further, as illustrated in FIG. 11, the purchase terminal 200 displays information 1120 on the second gift card which is the first ranking based on the priority information on at least one coupon/gift card related with the plurality of stores in the received information (S970).

Thereafter, when a specific coupon (alternatively, a specific gift card) is selected from the information on at least one coupon and/or gift card displayed on the purchase terminal 200, the purchase terminal 200 displays store information on at least one store which may use the specific coupon (alternatively, the specific gift card) selected from the plurality of objects (alternatively, stores) included in the 3D panoramic image information displayed on the purchase terminal 200. In this case, the purchase terminal 200 may display the store information on at least one store which may use the selected specific coupon (alternatively, specific gift card) by using an augmented reality function. Herein, the store information includes a store name, operating time information of the corresponding store, positional information of the store, a phone number of the store, product information/service information provided in the corresponding store, and the like. Further, the product information includes product names, product-specific codes, product images, product description information, experience information on products, evaluation information on products, and the like. Further, the service information includes service names, service-specific codes, service basic images, service description information, experience information on services, evaluation information on services, and the like.

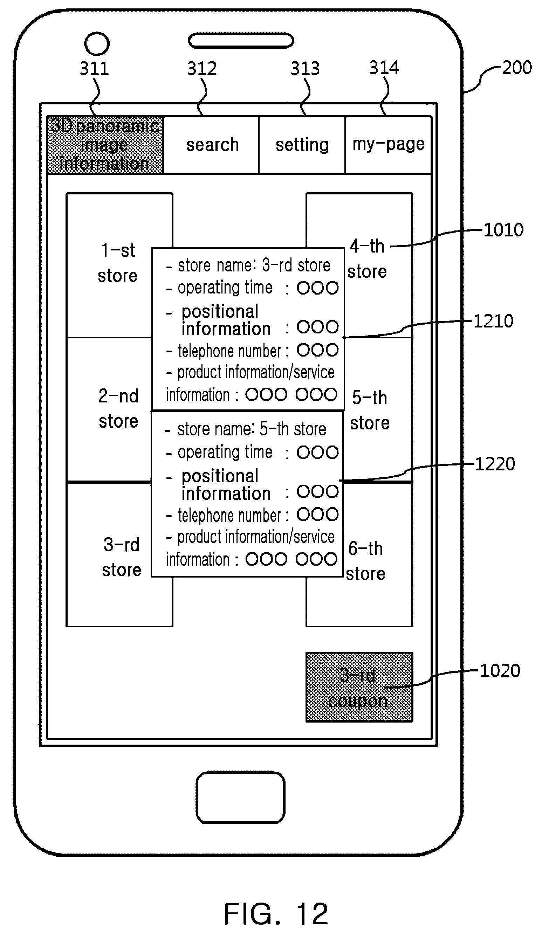

As an example, when information 1020 on the third coupon is selected from the information illustrated in FIG. 10, as illustrated in FIG. 12, the purchase terminal 200 displays third store information 1210 on the third store which may use the selected third coupon and fifth store information 1220 on the fifth store in the first to sixth stores included in the 3D panoramic image information 1010 of the ABCD large shopping mall. In this case, as illustrated in FIG. 12, the purchase terminal 200 may also display the third store information 1210 on the third store and the fifth store information 1220 on the fifth store on a popup screen (alternatively, a popup format) while the 3D panoramic image information 1010 of the ABCD large shopping mall is displayed, or display the third store information on the third store and the fifth store information on the fifth store on a new screen.

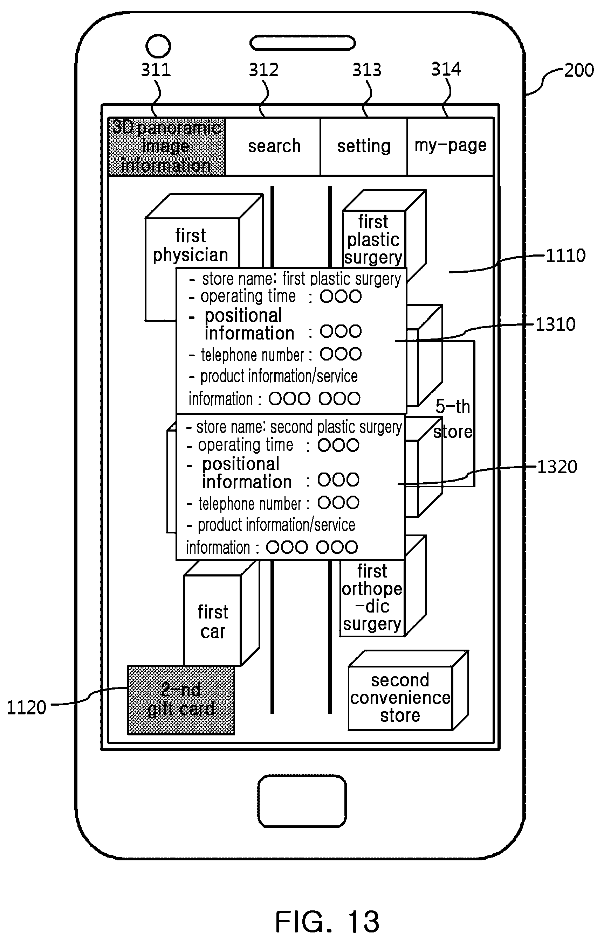

As another example, when the information 1120 on the second gift card is selected from the information illustrated in FIG. 11, as illustrated in FIG. 13, the purchase terminal 200 displays store information 1310 on the first plastic surgery and store information 1320 on the second plastic surgery which may use the selected second gift card in the plurality of stores included in the second 3D panoramic image information 1110 in the road view form (S980).

Thereafter, when specific store information is selected from the store information on at least one store displayed on the purchase terminal 200 (alternatively, after the specific store information is selected, when a predetermined button (alternatively, a download button/purchase button) displayed adjacently to the corresponding specific store information is selected), the purchase terminal 200 performs an issuance function on the selected specific coupon or specific gift card or an issuance function after payment.

That is, when specific store information is selected from the store information on at least one store displayed on the purchase terminal 200 (alternatively, after the specific store information is selected, when a predetermined download button displayed adjacently to the corresponding specific store information is selected), the purchase terminal 200 transmits the selected specific store information (alternatively, the selected button information) to the server 100. Further, the server 100 issues a specific coupon (for example, including the selected specific coupon (e.g., a discount coupon, a free coupon, and the like)), which may be used in the corresponding specific store corresponding to the specific store information (alternatively, the selected button information) based on the selected specific store information (alternatively, the selected button information) transmitted from the purchase terminal 200, to the purchase terminal 200. Further, the purchase terminal 200 stores the specific coupon (for example, including a discount coupon, a free coupon, and the like) which is usable in the corresponding specific store issued from the server 100.

Further, when the specific store information is selected in the store information on at least one store displayed on the purchase terminal 200 (alternatively, after the specific store information is selected, a predetermined purchase button/payment button displayed adjacently to the corresponding specific store information is selected), the purchase terminal 200 performs a payment function on the specific gift card which is usable in the specific store corresponding to the corresponding specific store information by interlocking with the server 100, the payment server 300, and the selling terminal 400. Further, when the payment function is normally performed, the server 100 issues the specific gift cared which may be used in the corresponding specific store corresponding to the specific store information (alternatively, the selected button information) based on the selected specific store information (alternatively, the selected button information) to the purchase terminal 200. Further, the purchase terminal 200 stores the specific gift card which is usable in the corresponding specific store issued from the server 100.

As an example, when the third store information 1210 is selected from the third store information 1210 on the third store and the fifth store information 1220 on the fifth store which may use the selected third coupon illustrated in FIG, 12, the purchase information 200 receives the third coupon which may be issued from the server 100 and used in the third store and the fifth store, and stores the received third coupon.

As another example, when a predetermined purchase button is selected from store information 1310 on the first plastic surgery and store information 1320 on the second plastic surgery which may use the selected second gift card illustrated in FIG. 13, the purchase terminal 200 performs the payment function for the payment price corresponding to the selected second gift card by interlocking with the server 100, the payment server 300, and the selling terminal 400. Further, after the payment function is normally performed, the purchase terminal 200 receives the second gift card which may be issued from the server 100 and used in the first plastic surgery and the second plastic surgery, and stores the received second gift card (S990).

In the embodiment of the present invention, as described above, when an object to be found is searched in image information on a road view of a street on which a shopping mall including stores at which products are displayed or stores are positioned, the corresponding image information where a product or a service corresponding to the searched object exists is displayed to thereby provide views actually encountered in department stores, shopping malls, streets, and the like as they are, and easily and conveniently search additional information associated with products or stores provided offline and verify a search result thereof.

Further, in the embodiment of the present invention, as described above, in image information on a road view of a street on which a shopping mall including stores at which products are displayed or stores are positioned, a coupon or gift card usable in a store included in the corresponding image information is displayed, one or more stores at which the coupon or gift card can be used are displayed when the coupon or gift card is selected, and the corresponding coupon is issued to a terminal or a payment function for the corresponding gift card is performed and thereafter, the corresponding gift card of which payment is completed is issued to the terminal to thereby improve user convenience and satisfaction and increase sales of business owners.

According to the present invention, when an object to be found is searched in image information on a road view of a street on which a shopping mall including stores at which products are displayed or stores are positioned, the corresponding image information where a product or a service corresponding to the searched object exists is displayed to thereby provide views actually encountered in department stores, shopping malls, streets, and the like as they are, and easily and conveniently search additional information associated with products or stores provided offline and verify a search result thereof, and the present invention can be widely used in a panoramic image field, a shopping information providing field, a marketing field, a terminal field, a server field, and the like.

Hereinabove, although the present invention is described by specific matters such as concrete components, and the like, embodiments, and drawings, they are provided only for assisting in the entire understanding of the present invention. Therefore, the present invention is not limited to the embodiments. Therefore, the present disclosure is not limited to the embodiments. Various modifications and changes may be made by those skilled in the art to which the present disclosure pertains from this description. Therefore, the spirit of the present disclosure should not be limited to the above-described embodiments and the following claims as well as all modified equally or equivalently to the claims are intended to fall within the scope and spirit of the disclosure.
The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. A system for providing shopping information based on augmented reality, the system comprising:
a server verifying 3D panoramic image information including an object corresponding to positional information of a purchase terminal among a plurality of 3D panoramic image information configured by including an image of a store having store information including positional information as the object and transmitting the verified 3D panoramic image information corresponding to the positional information of the purchase terminal; and
the purchase terminal displaying the 3D panoramic image information corresponding to the positional information of the purchase terminal, which is transmitted from the server on a pre-executed application execution result screen, displaying, when a predetermined search item included in the application execution result screen is selected, a search word input screen for receiving a search word corresponding to the selected search item, and transmitting, to the server, a search word depending on a user input, pre-stored member information, the positional information of the purchase terminal, and the identification information of the purchase terminal,
**characterized in that**
the server verifies another 3D panoramic image information including another object corresponding to the search word and the positional information of the purchase terminal among the plurality of 3D panoramic image information, and transmits the verified another 3D panoramic image information to the purchase terminal, and
the purchase terminal displays, when the 3D panoramic image information transmitted from the server to correspond to the search word and the positional information of the purchase terminal is plural, displays the plurality of 3D panoramic image information based on the positional information of the purchase terminal, through a PIP function or a screen division function, and provides at least one function of a function to display a predetermined emoticon or icon on another object corresponding to the search word, a function to provide a highlight effect to the another object, and a function to provide an effect of displaying an outer contour of the another object with a predetermined color in order to easily verify another object which is a store corresponding to the search word.

2. The system of claim 1,
**characterized in that**
the 3D panoramic image information is generated based on any one recorded image information or real-time image information among fixed real-time image information photographed through a camera pre-installed at a specific location, mobile recorded image information photographed through a camera installed in a moving device, and real-time image information photographed through the camera installed in the moving device.

3. A control method of a system for providing shopping information based on augmented reality, the control method comprising:
generating, by a server, panoramic image information including one or more stores and products in the store offline;
transmitting, by a purchase terminal, positional information of the purchase terminal and identification information of the purchase terminal to the server when an application pre-installed in the purchase terminal is executed;
verifying, by the server, 3D panoramic image information including an object corresponding to positional information of a purchase terminal among a plurality of 3D panoramic image information configured by including an image of a store having store information including positional information as the object, verifying information on at least one coupon and gift card associated with at least one object included in the 3D panoramic image information stored by interlocking with the verified 3D panoramic image information corresponding to the positional information of the purchase terminal, and verifying priority information for the at least one coupon and gift card;
receiving, by the purchase terminal, 3D panoramic image information corresponding to the positional information of the purchase terminal, which is transmitted from the server, the information on at least one coupon and gift card which interlock with the 3D panoramic image information, and the priority information for the at least one coupon and gift card;
displaying, by the purchase terminal, the received 3D panoramic image information corresponding to the positional information of the purchase terminal and information on at least one coupon and gift card which interlock with the received 3D panoramic image information;
displaying, by the purchase terminal, when a specific coupon or specific gift card is selected in the information on at least one coupon and gift card, which is displayed, store information for at least one store where the selected specific coupon or specific gift card is usable by using an augmented reality function; and
storing, by the purchase terminal, when specific store information is selected in the store information for at least one store, which is displayed, the selected specific coupon or specific gift card issued from the server,
**characterized in that**
in the storing of the selected specific coupon or specific gift card issued from the server,
the purchase terminal performs a payment function for the specific gift card by interlocking among the server, a payment server, and a selling terminal, when the specific gift card is selected, and stores the specific gift card issued from the server when the payment function is normally completed.

4. The control method of claim 3,
**characterized in that**
in the displaying of the information on at least one coupon and gift card which interlock with the received 3D panoramic image information, a part of the information on at least one coupon and gift card which interlock with the received 3D panoramic image information is displayed based on the priority information for the at least one received coupon and gift card.

5. The control method of claim 3,
**characterized in that**
in the storing of the selected specific coupon or specific gift card issued from the server, the purchase terminal stores the specific coupon issued from the server when the specific coupon is selected.

## Amended claims

### Amended claims in accordance with Rule 137(2) EPC.

1. A method for providing shopping information based on augmented reality, the method comprising:
generating, by a server (100), panoramic image information including information about one or more stores and products in the store offline;
wherein the server (100) recognizes each of one or more objects included in the panoramic image,
transmitting, by a purchase terminal (200), positional information of the purchase terminal (200) and identification information of the purchase terminal (200) to the server (100) by executing an application pre-installed in the purchase terminal (200);
confirming, by the server (100), 3D panoramic image information including an object and positional information of a purchase terminal (200) among a plurality of 3D panoramic image information including an image of a store having store information including positional information, confirming information on at least one coupon or gift card associated with at least one object included in the 3D panoramic image information stored, by interlocking with the verified 3D panoramic image information corresponding to the positional information of the purchase terminal, and confirming priority information for the at least one coupon or gift card;
receiving, by the purchase terminal (200), 3D panoramic image information corresponding to the positional information of the purchase terminal (200), which is transmitted from the server (100), the information on at least one coupon or gift card which interlock with the 3D panoramic image information, and the priority information for the at least one coupon or gift card;
displaying, by the purchase terminal (200), the received 3D panoramic image information corresponding to the positional information of the purchase terminal (200) and information on at least one coupon or gift card which interlock with the received 3D panoramic image information;
displaying, by the purchase terminal (200), when a specific coupon or specific gift card is selected, the information of at least one coupon or gift card, which is displayed, store information for at least one store where the selected specific coupon or specific gift card is usable by using an augmented reality function; and
storing, by the purchase terminal (200), when specific store information is selected in the store information for at least one store, which is displayed, the selected specific coupon or specific gift card issued from the server (100), wherein
in the storing of the selected specific coupon or specific gift card issued from the server,
the purchase terminal (200) performs a payment function for the specific gift card by interlocking with the server (100), a payment server (300), and a selling terminal (400), when the specific gift card is selected, and stores the specific gift card issued from the server when the payment function is normally completed.
